# FASCICULE DE BREVET EUROPEEN

(11) **EP 3 842 942 B1**
(45) Date de publication et mention de la délivrance du brevet: **12.02.2025**
(21) Numéro de dépôt: 20217379.5
(22) Date de dépôt: 28.12.2020
(51) Int. Cl.: G06F 9/50, G06F 9/44, G06F 9/54, G06F 3/06

(54) **PROCEDE ET SYSTEME D'AGREGATION DE DONNEES POUR UNE PLATEFORME DE GOUVERNANCE UNIFIEE D'UNE PLURALITE DE SOLUTIONS DE CALCUL INTENSIF**
VERFAHREN UND SYSTEM ZUR DATENAGGREGATION FÜR EINE GEMEINSAME VERWALTUNGSPLATTFORM FÜR EINE VIELZAHL VON SUPERCOMPUTING-LÖSUNGEN
METHOD AND SYSTEM FOR AGGREGATION OF DATA FOR A PLATFORM FOR UNIFIED GOVERNANCE OF A PLURALITY OF INTENSIVE CALCULATION SOLUTIONS

(30) Priorité: 27.12.2019 FR 1915662
(43) Date de publication de la demande: 30.06.2021
(73) Titulaire: BULL SAS, 78340 Les Clayes-sous-Bois (FR)
(72) Inventeur: CALEGARI, Patrice, 91790 Boissy-sous-Saint-Yon (FR); LEVRIER, Marc, 91410 Saint-Cyr-Sous-Dourdan (FR)
(74) Mandataire: Argyma

(56) Documents cités:
- EP-A1- 3 109 759
- EP-A2- 2 254 310
- WO-A1-2013/158707
- US-A1- 2013 159 380

## Description

L'invention s'intéresse au domaine des calculs hautes performances, et plus particulièrement à l'interfaçage à une même plateforme de plusieurs solutions de calcul intensif présentant différentes logiques métier. L'invention concerne notamment un procédé de génération d'une donnée agrégée accessible au niveau d'une interface agrégée d'un client utilisateur dans le cadre d'une plateforme centralisant l'accès à une pluralité de solutions de calcul intensif. En outre, l'invention concerne un système informatique de génération de donnée agrégée capable de générer une donnée agrégée accessible au niveau d'une interface agrégée d'un client utilisateur dans le cadre d'une plateforme centralisant l'accès à une pluralité de solutions de calcul intensif.

### [Art antérieur]

Le calcul haute performance, aussi appelé HPC (« High Performance Computing » en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en oeuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés noeuds ou serveurs) interconnectés par un réseau d'interconnexion pouvant réaliser des opérations communes. Le calcul à haute performance (HPC) est adopté par de plus en plus de scientifiques pour les aider à résoudre leurs problèmes complexes. En particulier, avec une augmentation entre 2017 et 2018 de plus de 50% de la puissance de l'ordinateur le plus puissant au monde, la puissance de calcul des supercalculateurs augmente sans cesse. De plus, il existe un nombre croissant de centres de calcul (locaux, régionaux, nationaux et internationaux) dotés de systèmes de classe pétaflopique. Etant donné qu'il n'est pas possible pour tous les utilisateurs d'investir dans les architectures informatiques capables de déployer de tels puissances de calcul, certains se sont spécialisés dans la fourniture d'accès à ces solutions de calcul haute performance.

Ainsi, ces dernières années ont vu l'apparition de plateformes d'accès à des solutions de calcul intensif. Par exemple, le document EP3109759A1 divulgue un système et une méthode pour gérer et contrôler des mises à jour de versions pour des services web déployés dans un environnement de type SOA (Architecture Orientée Services). Le document décrit notamment : Un module de gestion des dépendances qui reçoit des indications de mises à jour de version pour des services web. Un mécanisme pour accéder à une base de données de dépendances en réponse aux indications reçues. Un processus pour générer et fournir des indications sur les impacts des changements de version aux utilisateurs. Une approche pour gérer les dépendances entre différents services web et évaluer les conséquences des mises à jour.

En particulier, de nombreux portails HPC ont été développés. Les portails internet sont une voie commune pour accéder à l'information et aux services disponibles sur les réseaux informatiques. Les portails offrent souvent un point d'accès unique aux données et aux applications. En outre, un portail peut présenter une vue unifiée et personnalisée d'informations aux utilisateurs.

De nombreux projets HPC développent leur propre portail Web spécifique à une communauté et certains fournisseurs de cloud HPC ont développé des portails Web pour leur propre usage. Les relations entre le portail et ces systèmes d'information et de stockage sont essentielles mais complexes à mettre en oeuvre de manière sécurisée et efficace. Les données traitées dans des environnements HPC peuvent être très confidentielles (en particulier pour les industries ou les organismes financiers). Les portails HPC doivent gérer ces contraintes dans la manière dont ils exécutent les services sur le serveur principal (via l'emprunt d'identité, c'est-à-dire qu'ils exécutent le service « en tant que » utilisateur authentifié), ainsi que dans la manière dont ils affichent ou filtrent les informations dans le portail HPC.

De plus, au-delà de la puissance de calcul et du calcul haute performance, les scientifiques utilisateurs souhaitent pouvoir accéder à des solutions de calcul intensif tels que des machines quantiques, de la simulation quantique, des plateformes de « Deep Learning » ou plus largement dédiées au développement de solutions d'intelligence artificielle.

Néanmoins, chacune de ces solutions est hébergée ou rendue accessible par des sociétés dédiées à l'une ou l'autre de ces technologies et l'utilisation notamment simultanée de ces différentes solutions de calcul intensif devient laborieuse.

Ainsi, avec la multiplication des typologies de solutions de calcul intensif et la complémentarité de certaines de ces solutions, il apparait nécessaire de pouvoir disposer d'une plateforme permettant d'accéder indifféremment à différentes solutions de calcul intensif et cela de manière homogénéisée et transparente sans redondance d'information.

### [Problème technique]

L'invention a donc pour but de remédier aux inconvénients de l'art antérieur. En particulier, l'invention a pour but de proposer un procédé de génération d'une donnée agrégée accessible au niveau d'une interface agrégée d'un client utilisateur, notamment dans le cadre d'une gouvernance unifiée d'une pluralité de solutions de calcul intensif, ledit procédé permettant d'agréger efficacement l'accès aux résultats d'une pluralité de solutions de calcul intensif. L'invention a en outre pour but de proposer un système de génération d'une donnée agrégée accessible au niveau d'une interface agrégée d'un client utilisateur. Un tel système permet de supprimer la redondance des données entres les solutions de calcul intensif et de laisser toute latitude pour une ergonomie évolutive et adaptée à chaque nouvelle solution de calcul intensif.

### [Brève description de l'invention]

A cet effet, l'invention porte sur un procédé de génération d'une donnée agrégée accessible au niveau d'une interface agrégée d'un client utilisateur dans le cadre d'une gouvernance unifiée d'une pluralité de solutions de calcul intensif,
lesdites solutions de calcul intensif comportant au moins deux solutions parmi : un serveur de calcul haute performance, un serveur dédié à l'apprentissage supervisé ou non supervisé, et un serveur dédié aux calculs quantiques,
la gouvernance unifiée étant assurée au moins en partie par un système informatique de génération d'une donnée agrégée comportant : un microservice mandataire, et au moins un microservice de calcul pour chacune des solutions de calcul intensif,
ledit procédé de génération comportant les étapes de :
   - Réception, par le microservice mandataire, d'informations de commande d'accès d'un client utilisateur contenues dans un message provenant de l'interface agrégée,
   - Détermination de données accessibles au client utilisateur, par chacun des microservices de calcul, ladite détermination étant basée au moins en partie sur les informations de commande d'accès transmises par le microservice mandataire,
   - Détermination de données à agréger, par le microservice mandataire, à partir des données accessibles déterminées par chacun des microservices de calcul, lesdites données à agréger consistant en une sous partie des données accessibles,
   - Génération d'une donnée agrégée à partir des données à agréger, par le microservice mandataire, à partir des données accessibles déterminées par chacun des microservices de calcul, et
   - Transmission de la donnée agrégée, par le microservice mandataire à l'interface agrégée du client utilisateur.

Le procédé selon l'invention est mis en oeuvre dans le cadre d'une gouvernance unifiée d'une pluralité de solutions de calcul intensif permettant d'exposer, selon un modèle unique, des modèles et domaines d'applications de calcul intensif ou haute performance très variés : Calcul Parallèle Haute Performance, Intelligence Artificielle, Apprentissage Profond et simulation de calcul quantique. Cette gouvernance unifiée permet une convergence générale de domaines divers cherchant à exploiter la puissance et la souplesse des grappes de calcul (clusters) ou des supercalculateurs ainsi que leur utilisation en nuage.

Les plateformes existantes pour l'accès à des solutions de calculs intensifs sont spécialisées sur une méthode de calcul particulière et les architectures logicielles concernées ne sont pas en mesure de gérer la complexité d'interaction avec plusieurs solutions de calculs intensif.

De même, alors que les microservices sont utilisés dans de nombreux domaines de l'informatique, ils n'ont pas été proposés dans une architecture singulière capable d'agréger des données provenant ou à destination de solutions de calculs intensifs différentes présentant chacune leurs spécificités. En effet, en absence d'une structure adaptée, il n'est pas évident de concevoir une architecture capable de gérer les spécificités de chacune de solutions de calcul intensif tout en les coordonnant à partir d'un point unique. Ainsi, les solutions actuelles ne sont pas capables de gérer les ordonnanceurs de plusieurs solutions de calcul intensif et des flux de traitement représentant des charges systèmes très hétérogènes sur du matériel tout autant hétérogène. De même, les architectures, à base exclusivement de microservices, proposées dans d'autres domaines de l'informatique ne sont pas applicables à une solution devant agréger plusieurs solutions de calcul intensif.

Par ailleurs, un microservice correspond par définition à un service pouvant « tenir » dans une machine virtuelle ou un conteneur, ces deux objets ne pouvant jamais allouer plus de ressources physiques que le serveur (noeud) physique qui les héberge. Inversement, un seul travail de calcul scientifique, en particulier pour une application parallèle à mémoire distribuée (le cas le plus important), agrège la puissance de plusieurs dizaines, centaines ou milliers de ces serveurs (noeuds) physiques. Il s'apparente a contrario à un macro-travail et se trouve ainsi en opposition totale avec les divers modèles de virtualisation ayant permis de populariser l'approche microservice.

Enfin, la plupart des applications de calcul scientifique, en particulier sur le domaine très large des métiers utilisant la simulation numérique, ont été développées sur des modèles très anciens (20, 30 ans voire plus), totalement inadaptés à un mode connecté, orchestré ou basé sur de la découverte dynamique. Ces applications sont pour la plupart non intégrables dans un framework microservices. L'idée est ici de développer l'ensemble des intergiciels à l'état de l'art, eux-mêmes sous la forme de microservices, pour piloter sur une ou plusieurs infrastructures hautes performances un grand nombre d'applications ne pouvant elles-mêmes se conformer à ce modèle.

La présente invention permet de pallier cela grâce à une utilisation complémentaire de microservices de calcul chacun dédié à une solution de calcul intensif coopérant avec un microservice mandataire et une interface agrégée.

En particulier, le procédé selon l'invention permet une génération de données agrégées d'une interface agrégeant l'accès à plusieurs solutions de calcul intensif.

Un tel procédé permet de supprimer la redondance des données entres les solutions de calcul intensif que cela soit en direction des solutions de calcul intensif ou en direction d'un client utilisateur. En outre, une telle solution permet d'avoir une ergonomie évolutive, adaptée à chaque nouvelle solution de calcul intensif.

Ainsi, le procédé selon l'invention permet une solution proposant un point d'entrée unique vers les logiques métier (backends) différentes et cela avec une ergonomie unifiée (e.g. boutons, menus, logiques de workflows... normalisés).

De plus, outre le fait de fournir une interface agrégée permettant d'intégrer plusieurs solutions de calcul intensif et les rendre compatibles avec les produits logiciels classiques, la présence des différentes couches d'abstraction sous forme de microservices permet une normalisation des échanges et normalisation des vues (interfaces).

**Selon d'autres caractéristiques optionnelles du procédé, ce dernier peut inclure facultativement une ou plusieurs des caractéristiques suivantes, seules ou en combinaison** :
- le microservice mandataire reçoit une requête d'une interface agrégée en cours d'exécution sur un client utilisateur et en ce qu'il peut sélectionner un ou plusieurs des microservices de calcul à opérer sur la demande. Cela permet d'agréger efficacement l'accès à une pluralité de solutions de calcul intensif.
- le microservice mandataire fourni la possibilité de faire plusieurs demandes parallèles à plusieurs microservices de calcul et d'extraire un ensemble commun de données des sorties renvoyées par les microservices de calcul. Cela permet d'agréger efficacement l'accès à une pluralité de solutions de calcul intensif.
- les microservices de calcul peuvent être appelés avec des messages du microservice mandataire parallèles et les informations contenues dans des messages de réponse peuvent être agrégées au fur et à mesure que des résultats reviennent au microservice mandataire. Cela permet d'agréger efficacement l'accès à une pluralité de solutions de calcul intensif.
- la détermination de données à agréger met en oeuvre un référentiel de mots-clés comportant des correspondances entre données accessibles pour chacun des microservices de calcul. L'utilisation d'un tel référentiel de mots-clés permet d'accélérer la détermination des données à agréger et de centraliser les points de terminaison (« endpoint » en terminologie anglosaxonne) et arguments utilisés par les microservices de calcul et le microservice mandataire.
- le procédé comporte en outre les étapes suivantes :
   - Détermination de données redondantes, par le microservice mandataire, à partir des données accessibles déterminées par chacun des microservices de calcul, et
   - Transmission d'un seul exemplaire de chacune des données redondantes, par le microservice mandataire à l'interface agrégée du client utilisateur.
   Cela accélère la mise en oeuvre du procédé et limite les transferts de flux de données de façon à limiter l'occupation de la bande passante en particulier au niveau du système informatique de gouvernance unifiée.
- le procédé comporte en outre les étapes suivantes :
   - Transmission des données accessibles, par le microservice mandataire à l'interface agrégée du client utilisateur ; et
   - Détermination de données redondantes, par l'interface agrégée, à partir des données accessibles transmises par le microservice mandataire.
   Dans ce cas, c'est l'interface agrégée qui est chargée de ne sélectionner qu'une version des données redondante. Cela réduit la charge de traitement au niveau du système informatique de gouvernance unifiée.
- le système informatique de génération d'une donnée agrégée comporte en outre au moins un référentiel d'autorisations, le procédé de génération comporte en outre les étapes suivantes :
   - Réception, par le microservice mandataire, d'une commande d'action générée par le client utilisateur et contenue dans un message provenant de l'interface agrégée ;
   - Identification d'actions autorisées, par chacun des microservices de calcul, ladite identification étant basée au moins en partie sur la commande d'action et sur un référentiel d'autorisations ;
   - Génération d'une commande d'action transformée, par chacun des microservices de calcul ayant identifié une action autorisée ; et
   - Transmission de la commande d'action transformée, par chacun des microservices de calcul aux solutions de calcul intensifs concernés.
   Ainsi, à partir d'une seule commande émise par le client utilisateur, le système de gouvernance unifiée sera en mesure de donner des instructions à chacune des solutions de calcul intensif concernées par cette commande. Cela contribue donc à l'accès homogénéisé, transparent et sécurisé à une pluralité de solutions de calcul intensif à partir d'une seule interface agrégée.
- la donnée agrégée est sélectionnée parmi :
   - Des fichiers d'entrée de calculs accessibles et traitables par plusieurs solutions de calcul intensif ;
   - Des résultats de calculs accessibles et traitables par plusieurs microservices de calcul ;
   - Des mesures de consommation énergétique ;
   - Des mesures d'utilisation de ressources ;
   - Des paramètres systèmes ;
   - Des descriptions des infrastructures matérielles ;
   - Des données d'indice d'utilisation des processus de calcul intensifs ; et
   - Des données de durée avant complétude des calculs.
- le système informatique de génération d'une donnée agrégée comportant en outre un microservice de sécurité à jeton, au moins un référentiel de sécurité, et au moins un référentiel d'autorisations, ledit procédé comportant une procédure de gestion des autorisations accordées à un client utilisateur comportant les étapes de :
   - Réception, par le microservice de sécurité à jeton, d'informations d'accès d'un client utilisateur,
   - Authentification du client utilisateur et détermination, par le microservice de sécurité à jeton, d'au moins un attribut de rôle pour le client utilisateur à partir des informations de commande d'accès et de données mémorisées dans le référentiel de sécurité,
   - Génération d'un jeton, par le microservice de sécurité à jeton, ledit jeton permettant un accès à toutes les solutions de calcul intensif accessibles audit client utilisateur en fonction de l'au moins un attribut de rôle déterminé, et
   - Détermination d'autorisations accordées au client utilisateur, par l'au moins un microservice de calcul, ladite détermination étant basée sur l'au moins un attribut de rôle déterminé et des données contenues dans l'au moins un référentiel d'autorisations.
   Une telle procédure permet une authentification unique pour tous les microservices avec une gestion unique des rôles et des identités. Pour cela, une partie de la vérification de sécurité de la gouvernance unifiée dans un environnement d'exécution est avantageusement effectuée par le microservice de sécurité à jeton du système informatique de génération d'une donnée agrégée. En particulier, la sécurité est assurée via un cadre d'autorisation pouvant s'appuyer sur une gestion de rôles, une gestion des politiques d'autorisations, un mécanisme de contrôle basé sur des jetons, une délégation de la gestion des identités et une délégation des mécanismes d'authentification. Ce processus permet de coupler une authentification très flexible et générique (assurée par le microservice de sécurité) et très précise (assurée par chacun des microservices de solution de calcul intensif). En effet, le microservice de sécurité à jeton permet d'attribuer un rôle mais il n'est pas en mesure de réaliser une attribution fine d'autorisations à chacune des fonctionnalités des différentes solutions de calcul intensif. Le microservice de sécurité à jetons est alors par exemple complété par un catalogue d'autorisations spéciales dans les microservices de calcul. Ce catalogue peut être implémenté comme une table dans la base de données du backend (soit dans son propre microservice, soit dans un microservice dédié). Ainsi, le procédé selon l'invention propose une gestion d'autorisations dans le cadre d'une solution proposant un point d'entrée unique vers les logiques métier (backends) différentes et cela avec une ergonomie unifiée (e.g. boutons, menus, logiques de workflows... normalisés)
- les informations d'accès d'un client utilisateur proviennent d'un message envoyé depuis une interface agrégée du client utilisateur au microservice mandataire. Ainsi, l'information transite par le microservice mandataire au sein duquel elle pourra être mémorisée. Alternativement, les informations d'accès d'un client utilisateur proviennent d'un message envoyé depuis une interface agrégée du client utilisateur directement au microservice à jetons. Cela permet de simplifier la procédure d'autorisation.
- le message provenant du client utilisateur comporte des données d'identification du client utilisateur. Cela permet de déterminer à partir de quel dispositif matériel la connexion est requise.
- les informations d'accès d'un client utilisateur proviennent d'un message envoyé depuis une interface agrégée du client utilisateur au microservice mandataire.
- il comporte une procédure de gestion de commande d'action et en ce que dans le cadre de cette procédure de gestion de commande d'action, le système informatique de génération d'une donnée agrégée comporte en outre un microservice de sécurité à jeton, au moins un référentiel de sécurité et au moins un référentiel d'autorisations. La procédure peut comporter également une identification d'actions autorisées par chacun des microservices de calcul basée au moins en partie sur la commande d'action et sur un référentiel d'autorisations et en ce que les microservices de calcul peuvent, grâce au référentiel d'autorisations, déterminer si cette commande d'action se réfère à une ou plusieurs actions autorisées pour un client utilisateur donné.

D'autres mises en oeuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

Ainsi, l'invention porte en outre sur un système informatique de génération d'une donnée agrégée accessible au niveau d'une interface agrégée d'un client utilisateur dans le cadre d'une gouvernance unifiée d'une pluralité de solutions de calcul intensif, lesdites solutions de calcul intensif comportant au moins deux solutions sélectionnées parmi : un serveur de calcul haute performance, un serveur dédié à l'apprentissage supervisé ou non supervisé, et un serveur dédié aux calculs quantiques, la gouvernance unifiée étant assurée au moins en partie par le système informatique de génération d'une donnée agrégée, ledit système comportant :
- au moins un microservice de calcul pour chacune des solutions de calcul intensif, l'au moins un microservice de calcul étant configuré pour déterminer des données accessibles au client utilisateur, ladite détermination étant basée au moins en partie sur des informations de commande d'accès, et
- un microservice mandataire configuré pour :
   ∘ recevoir un message provenant de l'interface agrégée, ledit message comportant des informations de commande d'accès d'un client utilisateur,
   ∘ Déterminer des données à agréger à partir des données accessibles déterminées par chacun des microservices de calcul,
   ∘ Générer une donnée agrégée à partir des données à agréger à partir des données accessibles déterminées par chacun des microservices de calcul, et
   ∘ Transmettre la donnée agrégée à l'interface agrégée du client utilisateur.

Un tel système permet une gouvernance unifiée en permettant une convergence générale de domaines divers cherchant à exploiter la puissance et la souplesse des grappes de calcul (clusters) ou des supercalculateurs ainsi que leur utilisation en nuage. En particulier, un tel système selon l'invention permet une génération de données agrégées d'une interface agrégeant l'accès à plusieurs solutions de calcul intensif. Il permet de supprimer la redondance des données entres les solutions de calcul intensif que cela soit en direction des solutions de calcul intensif ou en direction d'un client utilisateur. En outre, une telle solution permet d'avoir une ergonomie évolutive, adaptée à chaque nouvelle solution de calcul intensif.

D'autres avantages et caractéristiques de l'invention apparaitront à la lecture de la description suivante donnée à titre d'exemple illustratif et non limitatif, en référence aux Figures annexées :
Figure 1 représente un schéma d'un système informatique de génération d'une donnée agrégée selon l'invention.
Figure 2 représente une illustration schématique d'un procédé de génération d'une donnée agrégée selon l'invention.
Figure 3 représente une illustration schématique d'un procédé de génération d'une donnée agrégée selon un mode de réalisation de l'invention.
Figure 4 représente une illustration schématique d'une procédure de gestion de commande d'action selon un mode de réalisation de l'invention.
Figure 5 représente une illustration schématique d'une procédure de gestion d'autorisation selon un mode de réalisation de l'invention.
Figure 6 représente un schéma d'un système informatique de génération d'une donnée agrégée selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la suite de la description, l'expression « **gestion des autorisations** » correspond au sens de l'invention à la capacité de gérer, en fonction de règles prédéterminées, l'accès aux solutions de calcul intensif d'une part et les droits d'utilisateurs sur ces solutions tels que lecture, écriture, copie, exécution, modification, et contrôle total.

Le terme « **agrégée** » ou « **agrégation** » peut correspondre au fait de présenter en un seul et même emplacement des données provenant de plusieurs origines différentes. L'agrégation peut également correspondre à la création d'une nouvelle donnée à partir d'au moins deux données différentes. Par exemple, cela peut correspondre à une durée totale avant complétude d'un projet de calcul, ladite durée totale prenant en compte la durée avant complétude sur un premier serveur de calcul intensif et la durée avant complétude sur un second serveur de calcul intensif, les deux durées n'étant pas simplement additionnées.

L'expression « **interface agrégée** » ou « **interface d'agrégation** » peut désigner au sens de l'invention une interface homme-machine graphique bénéficiant d'un procédé de collecte et d'agrégation d'informations provenant des solutions de calcul intensif. En outre, une interface agrégée peut bénéficier de l'organisation des informations selon l'une des caractéristiques de l'écran affichant ladite interface.

Le terme « **Donnée(s)** » correspond à un ou plusieurs fichiers ou une ou plusieurs valeurs de paramètres. Les valeurs de paramètres étant à destination des solutions de calcul intensifs, générées par des solutions de calcul intensifs ou encore générées à partir de données des solutions de calcul intensifs. Les données au sens de l'invention peuvent en particulier correspondre à des fichiers d'entrée de calculs accessibles et traitables par plusieurs solutions de calcul intensif, des résultats de calculs accessibles et traitables par plusieurs solutions de calcul intensif, des donnée de durée avant complétude des calculs, des valeurs issues de mesures de consommation énergétique, des valeurs de mesures d'utilisation de ressources (bande passante réseau, entrées-sorties stockage, mémoire, CPU, GPU...), des informations de facturation, des valeurs de paramètres système en particulier des systèmes mettant en oeuvre les solutions de calcul intensif ou encore des valeurs de paramètres de d'infrastructures matérielles hébergeant les solutions de calcul intensif.

L'expression « **solution de calcul intensif** » correspond de préférence à des infrastructures informatiques capable d'exécuter des calculs intensifs ou hautes performances tels que : Calcul Parallèle Haute Performance, Intelligence Artificielle, Apprentissage Profond, calcul quantique et simulation de calcul quantique.

Le terme « **microservice** » correspond à une chaine applicative comportant généralement une pluralité d'applications capables d'exécuter une ou plusieurs taches. Les microservices peuvent être reliés entre eux par l'intermédiaire d'API tel qu'une API REST. La présence dans le cadre de l'invention de microservices permet de conférer une forte modularité et évolutivité à la solution notamment au regard de l'implication de solutions de calcul intensif potentiellement très différentes.

L'expression « **Portail web** » ou plus simplement « **Portail** » peut désigner un outil d'accès pour accéder à différents types d'informations et d'applications via un système client à partir des ressources du réseau. Un outil pour afficher une page de portail peut être un navigateur Web. Cependant, un portail peut également être intégré dans d'autres applications. Les portails au sens de l'invention sont avantageusement capables de présenter des données de plusieurs sources telles que des applications Web dans une seule interface agrégée Web ou d'un navigateur. En outre, un portail offre la possibilité d'afficher des portlets dans l'interface agrégée. La configuration du portail peut inclure une définition de portail avec par exemple un fichier incluant langage de balisage extensible (XML), les fichiers de définition de portlet pour tous les portlets associés avec le portail, les pages de serveur Java (JSP), les descripteurs d'applications Web, des images telles que les fichiers de format d'échange graphique ( GIFs), les descripteurs de déploiement, les fichiers de configuration, les fichiers d'archive Java (JAR) qui contiennent des instructions logiques et de mise en forme pour l'application de portail, et tous les autres fichiers nécessaires pour une application de portail souhaitée.

Le terme « **portlet** » peut désigner des composants logiciels d'interface utilisateur connectables qui sont gérés et affichés dans un portail web. Une page de portail peut être affichée comme une collection de fenêtres de portlet ne se chevauchant pas, où chaque fenêtre de portlet affiche un portlet. Par conséquent, un portlet (ou d'une collection de portlets) ressemble à une application basée sur le Web qui est hébergé dans un portail.

Le terme « **requête** » peut désigner une demande d'information, généralement identifiée par un « lien » sur une page portail. Une demande peut être initiée par un « clic » sur un symbole affiché associé au « lien ».

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Le terme « **côté client** » peuvent désigner des activités qui peuvent être effectuées sur un client dans un environnement de réseau client - serveur. En conséquence, on peut indiquer les activités qui peuvent être exécutées le terme « du côté serveur » sur un serveur dans un environnement de réseau de serveur de client.

Le terme « **pluralité** » au sens de l'invention correspond à au moins deux. De préférence cela peut correspondre à au moins trois, de façon plus préférée au moins cinq et de façon encore plus préférée au moins dix.

On entend par « **traiter** », « **calculer** », « **exécuter** », « **déterminer** », « **afficher », « extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

Comme cela a été mentionné, il existe de nombreuses solutions de calcul intensif disponibles et accessibles aux utilisateurs ponctuels. Néanmoins, il n'existe pas de plateforme permettant d'unifier l'accès à une pluralité de solution de calcul intensif de façon homogène et sécurisée.

Les inventeurs ont donc proposé un système informatique 1 de génération d'une donnée agrégée permettant, via l'utilisation d'une pluralité de microservices, une gouvernance unifiée et une interface agrégée pour l'accès à une variété de services de fournisseurs tiers de solutions de calcul intensif.

Les solutions de calcul intensifs génèrent une grande quantité de données que cela soit des données obtenues lors de la réalisation des calculs intensifs ou lors de la surveillance de la réalisation de ces calculs intensifs. Une gouvernance unifiée d'une pluralité de solutions de calcul intensif va bénéficier de la mise en place d'une interface agrégée capable de transmettre une donnée reçue à tous les services concernés et/ou capable de supprimer la redondance des données entres les solutions de calcul intensif.

Pour cela, les inventeurs proposent l'utilisation d'un microservice mandataire, positionné entre une interface agrégée et des microservices de calcul et configuré pour agréger des données de façon notamment à supprimer la redondance et au-delà de cela proposer aux clients utilisateurs de nouvelles données issues de solutions de calculs indépendantes.

Ainsi, les procédés et systèmes développés par les inventeurs permettent de coupler une ergonomie adaptée à chaque nouveau domaine et une centralisation des informations.

L'invention porte donc sur un **procédé de génération d'une donnée agrégée accessible au niveau d'une interface agrégée 10 d'un client utilisateur 2.**

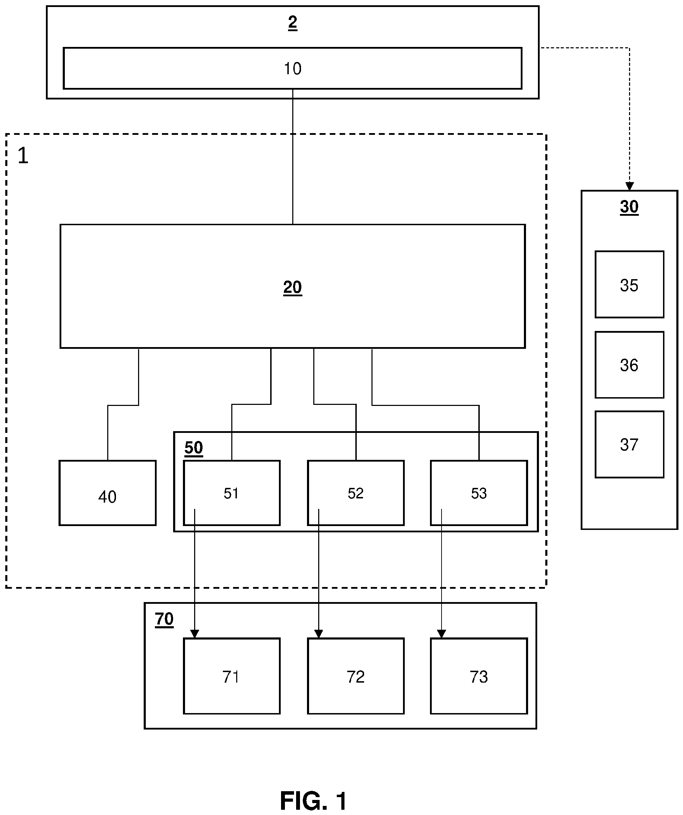

En particulier, comme cela est illustré à la **figure 1** et comme cela sera décrit par la suite, le procédé de génération d'une donnée agrégée et en particulier la gouvernance unifiée peuvent être assurés par un système informatique 1 de génération d'une donnée agrégée comportant : un microservice mandataire 20, et au moins un microservice de calcul 50, 51, 52, 53 pour chacune des solutions de calcul intensif.

La génération d'une donnée agrégée permettra grâce au procédé selon l'invention de centraliser des données provenant d'une pluralité de solutions de calcul intensif pour lesquelles le client utilisateur dispose d'un abonnement.

En effet, un procédé 200 de génération d'une donnée agrégée selon l'invention est avantageusement mis en oeuvre dans le cadre d'une gouvernance unifiée d'une pluralité de solutions de calcul intensif 70. Les solutions de calcul intensif 70 dans le cadre de la présente invention sont par exemple sélectionnées parmi : un serveur de calcul haute performance 71, un serveur dédié à l'apprentissage supervisé ou non supervisé 72, et un serveur dédié aux calculs quantiques 73, en particulier aux simulations de calcul quantique. En particulier, un serveur dédié à l'apprentissage supervisé ou non supervisé 72 peut être serveur dédié à l'apprentissage profond supervisé ou non supervisé. De façon préférée, les solutions de calcul intensif comportent au moins deux des solutions listées ci-dessus, de façon plus préférée au moins trois des solutions listées ci-dessus. De façon encore plus préférée, les solutions de calcul intensif comportent un serveur de calcul haute performance 71 et un serveur dédié aux calculs quantiques 73, en particulier aux simulations de calcul quantique.

En outre, l'interface agrégée 10 est avantageusement composée d'une pluralité de portlet 11,12,13, chaque portlet pouvant être associé à une solution de calcul intensif 71,72,73.

Les microservices de calcul 50 dans le cadre de la présente invention sont par exemple sélectionnées parmi : un microservice 51 relié à un serveur de calcul haute performance 71, un microservice 52 relié à un serveur dédié à l'apprentissage supervisé ou non supervisé 72, et n microservice 53 relié à un serveur dédié aux calculs quantiques 73, en particulier aux simulations de calcul quantique.

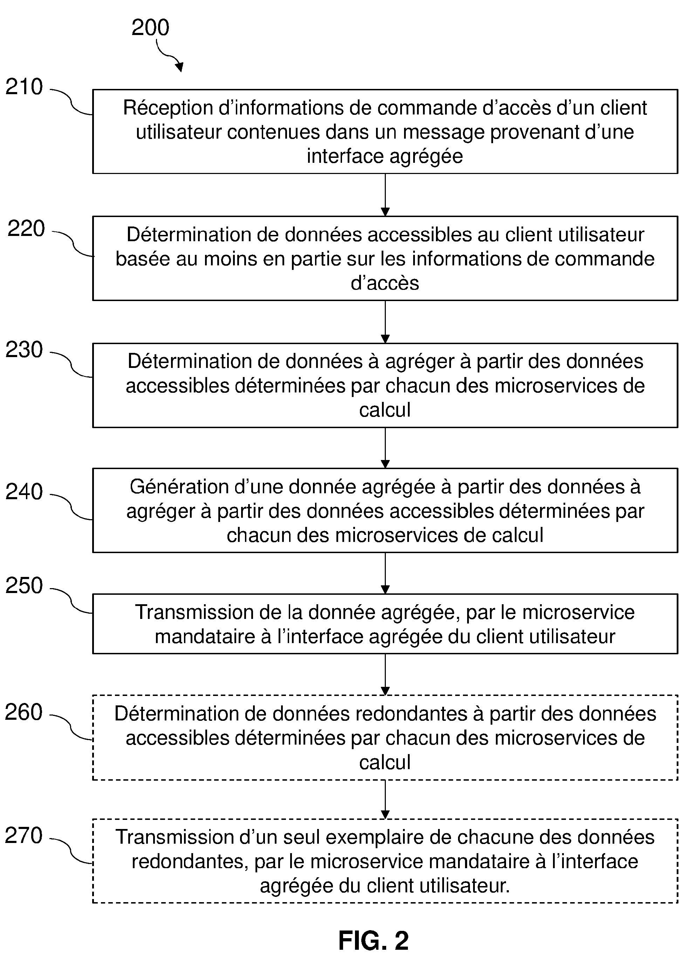

Comme cela est illustré à la **figure 2****,** un procédé 200 de génération d'une donnée agrégée selon l'invention comporte les étapes de réception 210 d'informations de commande d'accès d'un client utilisateur, détermination 220 de données accessibles au client utilisateur 2, détermination 230 de données à agréger, génération 240 d'une donnée agrégée à partir des données à agréger et de transmission 250 de la donnée agrégée à l'interface agrégée 10 du client utilisateur 2.

En outre, un procédé 200 de génération d'une donnée agrégée selon l'invention peut comporter des étapes de détermination 260 de données redondantes à partir des données accessibles déterminées par chacun des microservices de calcul et de transmission 270 d'un seul exemplaire de chacune des données redondantes, par le microservice mandataire à l'interface agrégée 10 du client utilisateur 2.

De plus, comme cela sera détaillé par la suite, le procédé de génération d'une donnée agrégée selon l'invention peut avantageusement intégrer une procédure 300 de gestion d'une commande d'action générée par le client utilisateur 2 et une procédure 100 de gestion d'autorisation.

En outre, le procédé de génération d'une donnée agrégée selon l'invention peut avantageusement intégrer des étapes de soumission de travaux, surveillance des travaux, suspension et reprise des travaux et modification des paramètres du travail.

Avantageusement, un procédé 200 de génération d'une donnée agrégée selon l'invention peut comporter une étape de modification de l'interface agrégée en fonction des autorisations accordées au client utilisateur. En effet, une fois identifié, le client utilisateur pourra bénéficier de nouvelles fonctionnalités et donc d'une interface agrégée cohérente avec ces fonctionnalités.

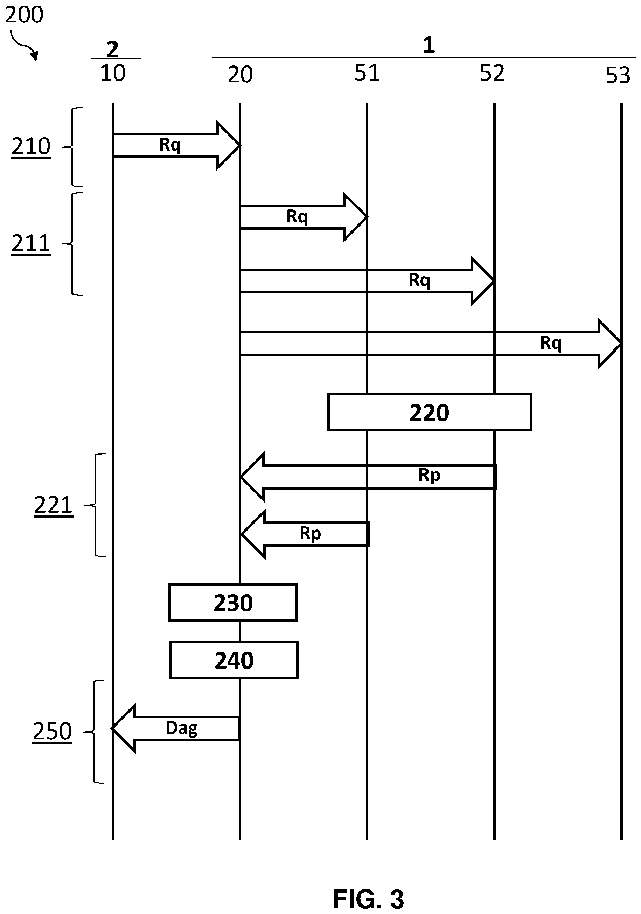

Certains modes de réalisation des différentes étapes d'un procédé selon l'invention vont maintenant être décrites en détail en lien avec la **figure 3****.**

Un procédé 200 de génération d'une donnée agrégée selon la présente invention comporte une **réception 210 d'informations de commande d'accès.** En particulier, cette étape peut correspondre à la réception d'un message provenant d'une interface agrégée 10, et donc du client utilisateur 2.

Comme cela est illustré à la **figure 3****,** c'est le microservice mandataire 20 qui va recevoir un message Rq provenant du client utilisateur 2 et généré par l'intermédiaire de l'interface agrégée 10. En effet, de façon préférée, au moins une partie des informations de commande d'accès sont générées au niveau de l'interface agrégée 10 du client utilisateur 2.

Le message Rq pourra en outre comporter des données d'identification du client utilisateur 2. Ce message Rq pourra être transmis aux microservices de calcul 51, 52, 53.

Ainsi, le microservice mandataire 20 peut recevoir une requête d'une interface agrégée 10 en cours d'exécution sur un client utilisateur 2 et il peut sélectionner un ou plusieurs des microservices de calcul 51, 52, 53 à opérer sur la demande.

Le microservice mandataire 20 peut fournir la possibilité de faire 211 plusieurs demandes Rq parallèles à plusieurs cibles (i.e. microservices de calcul 51, 52, 53) et d'extraire un ensemble commun de données des sorties renvoyées par les microservices de calcul 51, 52, 53.

Les un ou plusieurs des microservices de calcul 51, 52, 53 peuvent analyser la demande et identifier une donnée dont ils disposent et pour laquelle un accès est requis.

En particulier, un procédé 200 de génération d'une donnée agrégée selon la présente invention comporte **une détermination 220 de données accessibles au client utilisateur 2.**

Une telle détermination peut être réalisée par chacun des microservices de calcul 51, 52, 53. Elle se base au moins en partie sur les informations de commande d'accès reçues par le microservice mandataire 20.

Il existe de nombreuses variantes possibles dans la mise en oeuvre de la détermination 220 de données accessibles au client utilisateur 2. Avantageusement, chacun des microservices de calcul 51, 52, 53 comporte une mémoire de donnée capable de mémoriser des dernières valeurs d'une pluralité de paramètres relatifs à la solution de calcul intensif à laquelle il est lié. Alternativement, le microservice de calcul peut interroger un serveur hébergeant la solution de calcul intensif de façon à obtenir la dernière valeur demandée.

En outre, un microservice de calcul 51,52,53 peut ponctuellement enregistrer des informations fournies par le serveur de la solution de calcul intensif sur une bibliothèque de journalisation et stocker ces informations dans une base de données. Alternativement, c'est le microservice mandataire 20 qui peut ponctuellement enregistrer des informations fournies par le serveur de la solution de calcul intensif sur une bibliothèque de journalisation et stocker ces informations dans une base de données.

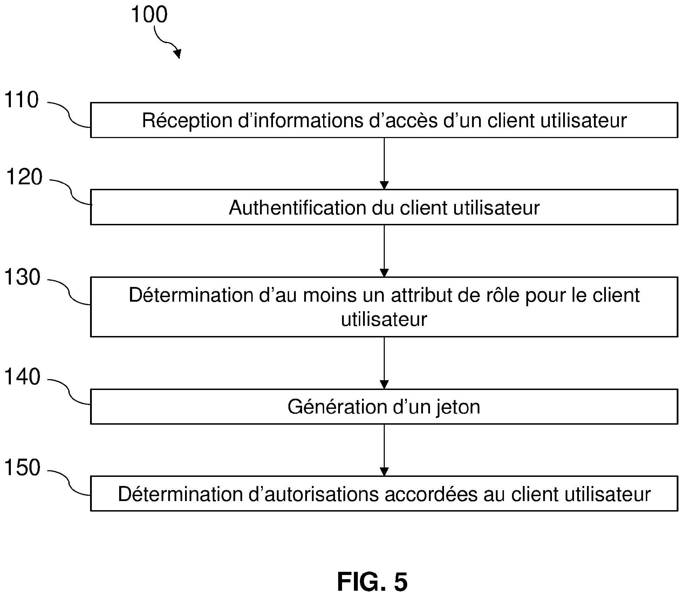

En outre, la détermination des données accessibles pourra prendre en compte une authentification 120 du client utilisateur 2 par exemple par l'intermédiaire d'un microservice de sécurité à jeton 30, en particulier en lien avec un référentiel de sécurité 35,36,37, et au moins un référentiel d'autorisations 40 comme cela sera décrit par la suite, notamment en lien avec la figure 5.

Une donnée à agréger possiblement accessible peut par exemple être sélectionnée parmi :
- Des fichiers d'entrée de calculs accessibles et traitables par plusieurs solutions de
   calcul intensif :
   Cela permet au client utilisateur 2 de disposer d'une vue agrégeant les fichiers d'entrée de calcul qui sont traitables par toutes les solutions de calcul intensif et ainsi appréhender la globalité de son activité.
- Des résultats de calculs accessibles et traitables par plusieurs microservices de calcul :
   Cela permet au client utilisateur 2 de disposer d'une vue agrégeant les résultats de calculs traités par toutes les solutions de calcul intensif et ainsi appréhender la globalité des résultats accessibles de son activité.
- Des mesures de consommation énergétique des solutions de calcul intensif :
   Cela permet au client utilisateur 2 de disposer d'une donnée résumant la consommation énergétique prévue, ou réelle des calculs intensifs planifiés et ainsi appréhender la globalité de la consommation de son activité.
- Des mesures d'utilisation de ressources (bande passante réseau, entrées-sorties stockage, mémoire, CPU, GPU...) :
   Ainsi, au lieu de disposer de données éparpillées au sein des différentes solutions de calcul intensif, le client utilisateur 2 reçoit une donnée agrégée de l'utilisation des ressources associée à ses calculs intensifs.
- Des paramètres systèmes :
   Ainsi, le client utilisateur 2 reçoit une donnée agrégée des paramètres systèmes des solutions de calcul intensif utilisées.
- Des descriptions des infrastructures matérielles :
   Ainsi, le client utilisateur 2 reçoit une donnée agrégée des descriptions des infrastructures matérielles des solutions de calcul intensif utilisées.
- Des données d'indice d'utilisation des processus de calcul intensifs :
   Au-delà de la mesure d'utilisation de ressources, il est avantageux de pouvoir recevoir une valeur d'indice d'utilisation des processus de calcul intensifs agrégeant des données provenant des différentes solutions de calcul utilisées. Par exemple, cette valeur d'indice peut être calculée à partir des durées d'utilisation ainsi que des capacités utilisées. Cette valeur d'indice d'utilisation des processus de calcul intensifs peut par exemple être ensuite utilisée pour calculer un cout d'utilisation des processus de calcul intensifs et établir une facturation commune.
- Des données de durée avant complétude des calculs :
   Par exemple si une problématique est divisée entre plusieurs solutions de calcul intensif alors il est proposé un temps agrégé reflétant la fin des opérations pour chacun des serveurs et permettant d'obtenir les résultats attendus complets.

De façon préférée, la donnée agrégée est sélectionnée parmi :
- Des résultats de calculs accessibles et traitables par plusieurs microservices de calcul ;
- Des mesures de consommation énergétique des solutions de calcul intensif ;
- Des mesures d'utilisation de ressources ;
- Des données d'indice d'utilisation des processus de calcul intensifs ; et
- Des données de durée avant complétude des calculs.

De façon plus préférée, la donnée agrégée est sélectionnée parmi :
- Des résultats de calculs accessibles et traitables par plusieurs microservices de calcul ;
- Des mesures de consommation énergétique ; et
- Des mesures d'utilisation de ressources.

De façon plus préférée, la donnée agrégée correspond à des données d'indice d'utilisation des processus de calcul intensifs.

Une fois la détermination 220 de données accessibles au client utilisateur 2 réalisée, les microservices ayant identifié une donnée accessible pourront envoyer 221 la donnée au microservice mandataire 20 dans un message de réponse Rp.

Comme illustré à la figure 3, un procédé 200 de génération d'une donnée agrégée selon la présente invention comporte une **détermination 230 de données à agréger.**

De façon préférée, la détermination 230 est réalisée par le microservice mandataire 20. La détermination 230 de données à agréger est par exemple réalisée à partir des données accessibles déterminées par chacun des microservices de calcul 51,52,53.

Les microservices de calcul 51, 52, 53 peuvent être appelés avec des messages du microservice mandataire 20 parallèles et les informations contenues dans les messages de réponse Rp peuvent être agrégées (sous réserve de temporisations configurables) au fur et à mesure que les résultats reviennent au microservice mandataire 20.

En particulier, la détermination 230 de données à agréger peut mettre en oeuvre un référentiel de mots-clés 21 comportant des correspondances des catégories de données accessibles pour chacun des microservices de calcul 51,52,53.

Un procédé 200 de génération d'une donnée agrégée selon la présente invention comporte une **génération 240 d'une donnée agrégée à partir des données à agréger.** En particulier, cette donnée agrégée est une nouvelle donnée générée à partir de plusieurs données provenant chacune directement ou indirectement de solutions de calcul intensif 71,72,73 différentes et n'étant pas configurées pour fonctionner ensembles.

Cette donnée agrégée est donc inédite et permet au client utilisateur 2 d'informer sur une activité globale de calculs intensifs repartis entre plusieurs services indépendants.

Le microservice mandataire 20 peut fusionner et formater les données de sortie si nécessaire.

Un procédé de 200 de génération d'une donnée agrégée Dag selon la présente invention comporte alors une **transmission 250 de ladite donnée agrégée.**

Comme cela est illustré à la figure 3, cette transmission est de préférence réalisée par le microservice mandataire 20 à destination de l'interface agrégée 10 du client utilisateur 2.

Alternativement, la donnée agrégée peut être transmises à d'autres microservices tels que par exemple :
- un serveur 80 de visualisation distante, de préférence un serveur de visualisation 3D distante, et
- un microservice 55 de gestion.

Avantageusement, la donnée agrégée est transmise à un serveur 80 de visualisation distante, et le procédé selon l'invention comporte en outre une étape d'établissement d'une liaison de communication, de préférence sécurisée (e.g. chiffrement), entre le client utilisateur 2 et le serveur de visualisation 80 distante, une étape de génération de données de représentation à partir de la donnée agrégée par le serveur 80 de visualisation distant et une étape de transmission, par le serveur 80 de visualisation, des données de représentation au client utilisateur 2.

Un procédé de génération de données agrégées peut également être utilisé dans le contexte de l'invention pour gérer la **redondance des données.**

En effet, dans le cadre de la gouvernance unifiée d'une pluralité de solutions de calcul intensif 70, une suppression de la redondance de donnée, en particulier au niveau d'une interface agrégée 10 peut permettre de fluidifier le transfert d'informations et limiter les erreurs.

Ainsi, un procédé selon l'invention peut avantageusement comporter en outre une détermination 260 de données redondantes. Cette étape peut être réalisée par exemple par le microservice mandataire 20 et à partir des données accessibles déterminées par chacun des microservices de calcul. En outre, il peut comporter une étape de transmission 270 d'un seul exemplaire de chacune des données redondantes, par le microservice mandataire 20 à l'interface agrégée du client utilisateur 2.

Alternativement, les données accessibles sont transmises par le microservice mandataire 20 à l'interface agrégée du client utilisateur 2 et c'est l'interface agrégée 10 qui détermine les données redondantes.

Un procédé de génération de données agrégées peut également comporter une **procédure 300 de gestion de commande d'action.** Dans le cadre de cette procédure 300 de gestion de commande d'action, le système informatique 1 de génération d'une donnée agrégée peut comporter en outre un microservice de sécurité à jeton 30, au moins un référentiel de sécurité 35,36,37 et au moins un référentiel d'autorisations 40.

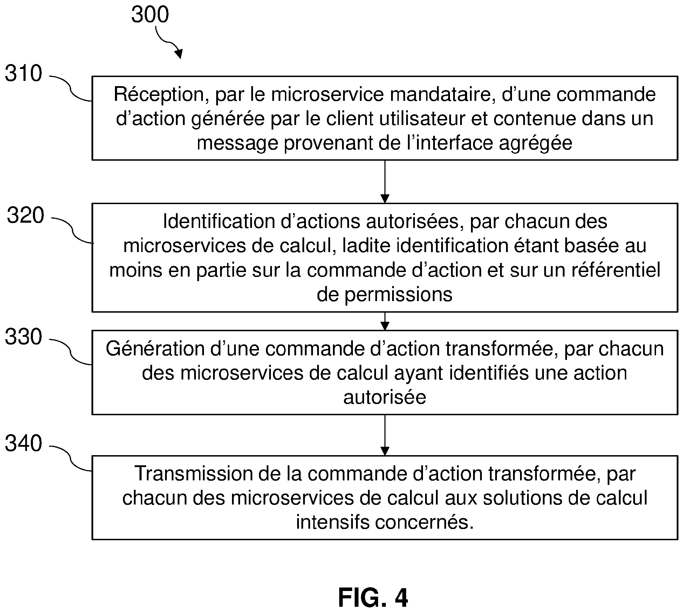

Comme cela est illustré à la figure 4, une **procédure 300 de gestion de commande d'action** peut comporter une réception 310, par le microservice mandataire 20, d'une commande d'action générée par le client utilisateur 2. Cette commande d'action peut par exemple être contenue dans un message provenant de l'interface agrégée 10.

La procédure 300 peut comporter également une identification 320 d'actions autorisées par chacun des microservices de calcul 50,51,52,53. Cette identification est de préférence basée au moins en partie sur la commande d'action et sur un référentiel d'autorisations 40 qui sera décrit par la suite. Ainsi, à partir d'un message émis par une interface agrégée 10 et comportant une commande d'action, les microservices de calcul peuvent, grâce au référentiel d'autorisations 40, déterminer si cette commande d'action se réfère à une ou plusieurs actions autorisées pour un client utilisateur 2 donné.

La procédure 300 comporte également une génération 330 d'une commande d'action transformée, par chacun des microservices de calcul 50,51,52,53 ayant identifié une action autorisée. En effet, alors que la commande d'action générée par l'interface agrégée a pris une forme pouvant être adressée par tous les microservices de calcul grâce par exemple à un référentiel commun de mots-clés, les microservices de calcul peuvent dans un second temps générée une commande d'action transformée qui pourra être adressée par les solutions de calcul intensif. Etant données que ces solutions sont indépendantes, les commandes d'action transformées seront généralement différentes en fonction des microservices de calcul.

La procédure 300 peut comporter également une transmission 340 de la commande d'action transformée, par chacun des microservices de calcul 50,51,52,53 aux solutions de calcul intensifs 70 concernés.

Un procédé de génération de données agrégées peut également comporter une **procédure 100 de gestion d'autorisation accordées à un client utilisateur** 2. Dans le cadre de cette procédure 100 de gestion d'autorisation, le système informatique 1 de génération d'une donnée agrégée peut comporter en outre un microservice de sécurité à jeton 30, au moins un référentiel de sécurité 35,36,37 et au moins un référentiel d'autorisations 40.

Comme cela est illustré à la **figure 5****,** une procédure 100 de gestion d'autorisation selon l'invention comporte les étapes de réception 110 d'informations d'accès d'un client utilisateur 2, d'authentification 120 du client utilisateur 2, de détermination 130 d'au moins un attribut de rôle pour le client utilisateur 2, de génération 140 d'un jeton, et de détermination 150 d'autorisations accordées au client utilisateur 2.

En outre, une procédure 100 de gestion d'autorisation selon l'invention peut comporter des étapes de soumission de travaux, surveillance de travaux, suspension et reprise de travaux et modification des paramètres du travail.

Avantageusement, un procédé 100 de gestion selon l'invention peut comporter une étape de modification de l'interface agrégée en fonction d'autorisations accordées au client utilisateur. En effet, une fois identifié, le client utilisateur pourra bénéficier de nouvelles fonctionnalités et donc d'une interface agrégée cohérente avec ces fonctionnalités.

Ainsi, la procédure 100 de gestion d'autorisation selon la présente invention comporte une **réception 110 d'informations d'accès d'un client utilisateur 2.**

De façon préférée, au moins une partie des informations d'accès sont générées au niveau de l'interface agrégée 10 du client utilisateur 2.

En particulier, la réception peut être faite par le microservice de sécurité à jeton 30. Néanmoins, de façon préférée, ces informations sont transférées du client utilisateur directement ou indirectement au microservice mandataire 20, puis le microservice mandataire 20 transfère alors ces informations d'accès modifiées, ou non, au microservice de sécurité à jeton 30.

Les informations d'accès peuvent par exemple prendre la forme d'un message provenant du client utilisateur comportant des données d'identification du client utilisateur 2.

Ainsi, la procédure 100 de gestion d'autorisation selon la présente invention comporte **une authentification 120 du client utilisateur 2.**

L'authentification peut par exemple être réalisée par tout module capable de mettre en oeuvre un protocole d'authentification unique (SSO pour « Single Sign On » en terminologie anglosaxonne). Différents protocoles peuvent être utilisés pour réaliser l'authentification du client utilisateur 2. De façon préférée, l'authentification 130 du client utilisateur 2 se fait selon un protocole sélectionné parmi OAuth protocole connu permettant à une application tierce d'accéder à un service web, et SAML pour « Security assertion markup language » selon une terminologie anglo-saxonne, concernant un standard informatique définissant un protocole pour échanger des informations liées à la sécurité et permettant l'authentification unique d'un utilisateur.

Avantageusement, l'authentification 120 du client utilisateur 2 n'est pas réalisée par le microservice mandataire 20. De façon plus préférée, l'authentification est réalisée par un microservice de sécurité à jeton 30. Il y a ainsi une délégation, par le microservice mandataire 20, du contrôle d'identification, d'authentification et d'attribution de rôle au microservice de sécurité à jeton 30.

En particulier, le microservice de sécurité à jetons 30 est configuré pour accéder à une pluralité d'annuaire ou référentiels de sécurité 35, 36, 37, de préférence à au moins des annuaires de type LDAP, pour « Lightweight Directory Access Protocol » selon une terminologie anglo-saxonne, un service de stockage et de gestion d'un système d'information tel que la solution connue Active Directory^{®} et un système d'authentification tel que le protocole d'authentification connu Kerberos^{®}. Le référentiel de sécurité 35,36,37 peut correspondre à un support de stockage de clés et/ou de jetons, telle qu'une base de données, un fichier de données ou tout autre système de stockage sécurisé dans une mémoire. C'est généralement un support sécurisé permettant de stocker les noms, mots de passe, rôles et autorisations des utilisateurs. De préférence, il comporte une matrice de rôle et une matrice de souscription.

En outre, le microservice de sécurité à jetons 30 met avantageusement en oeuvre un protocole de type OAuth et en particulier de type OAuth 2.0.

De façon préférée, bien que le microservice de sécurité à jeton 30 fasse partie d'un système informatique 1 de génération d'une donnée agrégée selon l'invention, il est avantageusement hébergé sur un ou plusieurs dispositifs informatiques (e.g. serveurs) différents, distincts du ou des dispositifs informatiques hébergeant le microservice mandataire 20 et/ou les microservices de calcul 50, 51, 52, 53.

Il existe de nombreuses variantes possibles dans la mise en oeuvre de l'authentification 130 du client utilisateur 2. Avantageusement, le microservice de sécurité à jeton 30 peut fournir une très grande variété de protocole d'authentification mais n'est pas en mesure de fournir des contrôles de sécurité à grains fins optimisés. Pour remédier à cette situation, les inventeurs ont proposés une délégation uniquement d'un sous ensemble de contrôle au microservice de sécurité à jeton 30. Si le microservice de sécurité à jeton 30 ne peut pas fournir des contrôles de sécurité suffisamment fins pour des solutions de calcul intensif, ces contrôles seront confiés aux microservices de calcul.

En outre, le microservice mandataire peut enregistrer des informations fournies par le client utilisateur sur une bibliothèque de journalisation et stocker ces informations dans une base de données.

L'authentification 130 du client utilisateur 2 peut aussi correspondre à une authentification d'un client développeur. Avantageusement, le microservice de sécurité à jeton 30 sera invoqué à chaque fois qu'un tiers contactera le microservice mandataire et nécessitera une authentification.

Ainsi, la procédure 100 de gestion d'autorisation selon la présente invention comporte une **détermination 130 d'au moins un attribut de rôle pour le client utilisateur 2.**

De façon préférée, la détermination 130 est réalisée par le microservice de sécurité à jeton 30. La détermination 130 d'au moins un attribut de rôle pour le client utilisateur 2 est par exemple réalisée à partir des informations de commande d'accès et de données mémorisées dans un référentiel de sécurité 35.

Une fois le client utilisateur authentifié, le procédé selon l'invention va permettre la génération d'un jeton permettant un accès temporaire à des ressources gérées par les microservices de calcul. En particulier, le procédé selon l'invention repose sur des autorisations contrôlées via des rôles ou attributs de rôle préalablement déterminés.

Sur la base de règles prédéterminée, un rôle est sélectionné pour un client utilisateur 2 et inscrit dans un jeton d'identification du client utilisateur.

Le jeton peut par exemple prendre la forme d'un jeton JWT (« JSON Web Token » en terminologie anglosaxonne). Il contient les demandes sur l'identité du client utilisateur authentifié. Alternativement, le procédé selon l'invention peut mettre en oeuvre un jeton de type PASETO (« Platform-Agnostic Security Tokens » en terminologie anglosaxonne), un jeton de type Branca ou encore un jeton de type Macaroons (Cookies avec mises en garde contextuelles pour l'autorisation décentralisée dans le cloud selon Google^{®}).

De façon préférée, l'authentification 120 et la détermination 130 d'au moins un attribut de rôle pour le client utilisateur 2 est réalisée conformément au protocole OAuth 2.0.

En particulier, le microservice de sécurité à jeton 30 traite un message du microservice mandataire 20 et extrait la demande d'accès. Le microservice de sécurité à jeton 30 compile ensuite la liste des droits d'accès accordés pour le client utilisateur 2 et demande un jeton de sécurité pour les droits accordés.

Un jeton est alors généré et transmis au microservice mandataire 20 qui le transmet à son tour au client utilisateur.

Ainsi, la procédure 100 de gestion d'autorisation selon la présente invention comporte une **génération 140 d'un jeton.** En particulier, ce jeton généré permet un accès à toutes les solutions de calcul intensif accessibles (i.e. pour lesquelles le client utilisateur dispose des autorisations) audit client utilisateur 2 en fonction de l'au moins un attribut de rôle déterminé.

Néanmoins, ce jeton ne permet pas généralement de définir finement les autorisations accordées au client utilisateur 2 pour une ou plusieurs solutions de calcul intensif. De façon plus préférée, le jeton généré comporte des droits d'accès à une ou plusieurs solutions de calcul intensif ainsi qu'une caractéristique de rôle du client utilisateur 2.

Ainsi, la procédure 100 de gestion d'autorisation selon la présente invention comporte alors une **détermination 150 d'autorisations accordées au client utilisateur 2.**

Avantageusement, la détermination d'autorisations est basée sur l'au moins un attribut de rôle déterminé et des données contenues dans un référentiel d'autorisations 40.

La détermination d'autorisations 150 peut par exemple être réalisée par le microservice mandataire ou un microservice de calcul.

De façon préférée, la détermination 150 d'autorisations est réalisée par au moins un microservice de calcul 50, 51, 52, 53.

A titre d'exemple, une solution de calcul intensif peut présenter plus de 50 fonctionnalités qui doivent être multipliées par une distribution en fonction des rôles de l'utilisateur et des solutions. Ainsi, c'est généralement plusieurs centaines d'autorisations qui doivent être gérées. Dans le cadre de l'invention, un microservice de calcul est donc avantageusement couplé à un catalogue d'autorisations ou référentiel d'autorisations 40.

Ce catalogue ou référentiel d'autorisations 40 peut être implémenté comme une table dans la base de données du backend (soit dans son propre microservice, soit dans un microservice dédié).

Ainsi, au moins une partie du contrôle d'accès et de gestion d'autorisations est mise en oeuvre au niveau de chacun des microservices de calcul.

Grâce à cela il sera possible de répondre aux besoins d'autorisations très fines des solutions de calcul intensif tout en assurant un haut niveau de sécurité fourni par l'utilisation de jetons d'authentification.

Il existe des planificateurs ou ordonnanceurs permettant, au sein d'un ensemble de ressources réservées, de répartir les taches de calcul entre les moyens de calcul et de les ordonner. Néanmoins, ces procédés et dispositifs n'interviennent qu'une fois que les moyens de calcul ont été alloués et ne permettent pas à un opérateur de rapidement identifier les noeuds à allouer.

Ainsi, le procédé selon l'invention peut également comporter une étape de planification des taches. En effet, le procédé selon l'invention s'applique à une gouvernance unifiée d'une pluralité de solution de calcul intensif et il peut avantageusement comporter une étape au cours de laquelle des instructions reçues par le microservice mandataire 20 pourront être traitées de façon à organiser leur exécution optimale par les différentes solutions de calcul intensif disponibles.

De façon préférée, l'étape de planification des taches comporte une mise à jour d'une file d'attente par chacun des microservices de calcul 50, 51, 52, 53. En particulier, la mise à jour de la file d'attente peut prendre en compte une valeur d'indice de priorité transmise par le client utilisateur 2.

L'étape de planification des taches peut également comporter la détermination par au moins un microservices de calcul d'une quantité de ressource d'une solution de calcul qui sera attribuée à une tache donnée.

En outre, l'étape de planification des taches pourra comporter la transmission de données de paramétrage à la solution de calcul intensif en charge de l'exécution d'une tache donnée. Les données de paramétrages pourront par exemple correspondre à un ou plusieurs fichiers d'entrée, ou encore à un réglage spécifique à la solution de calcul intensif.

De façon préférée, l'étape de planification des taches pourra aussi comporter lors de l'initiation d'une tache, la transmission de données de paramétrage d'environnement telles que des identifiants des répertoires de travail à utiliser, les chemins d'accès aux données ou encore les bibliothèques à utiliser.

En outre, l'étape de planification pourra comporter :
- une surveillance des taches (i.e. travaux) incluant la détermination de l'état d'avancement des travaux, l'enregistrement de journaux d'application, l'enregistrement de fichiers de résultats, la détermination de quantités de ressources utilisées, la détermination d'une valeur de crédit utilisée,
- Une clôture ou une suspension des travaux,
- Une reprise des travaux suspendus,
- Une modification des paramètres des travaux.

De façon préférée, le procédé selon l'invention peut comporter une segmentation automatisée d'une tache en une pluralité de sous-taches attribuées à plusieurs solutions de calcul intensif différentes. Alternativement, un utilisateur peut par l'intermédiaire de l'interface agrégée définir la répartition de sous taches d'un même projet au travers de plusieurs solutions de calcul intensif. Ces sous-taches pourront être exécutées en série ou en parallèle en fonction de leurs spécificités.

**Selon un autre aspect,** l'invention porte sur un **système 1 informatique de génération d'une donnée agrégée accessible au niveau d'une interface agrégée 10** d'un client utilisateur 2 dans le cadre d'une gouvernance unifiée d'une pluralité de solutions de calcul intensif 70.

En particulier, un système 1 informatique de génération d'une donnée agrégée selon l'invention comporte un microservice mandataire 20 et au moins un microservice de calcul 50, 51, 52, 53 pour chacune des solutions de calcul intensif.

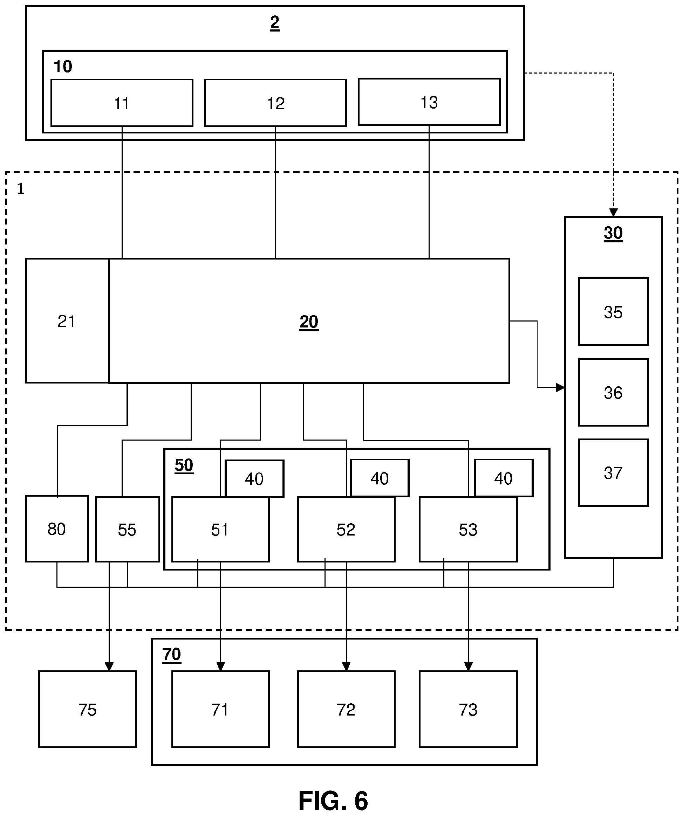

En outre, un exemple de schéma de principe du système 1 est présenté à la **figure 6****.** Un tel système 1 informatique de génération d'une donnée agrégée selon l'invention peut également comporter : un microservice de sécurité à jeton 30, au moins un référentiel de sécurité 35,36,37 un référentiel d'autorisations 40 et un serveur 80 de visualisation distante, de préférence un serveur de visualisation 3D distante.

Considérant l'implémentation du système selon l'invention, celui-ci peut être hébergé par un ou plusieurs serveurs informatiques. Il comporte en particulier un ensemble de microservices tels que des microservices mis en oeuvre selon des protocoles de codage de type node.js ou d'autres technologies telles que Go, Java/Kotlin/Scala, PHP, Python, Pharo, Elixir, Clojure, et Haskell.

Les microservices peuvent utiliser des entités de configuration, telles que des fichiers Json ou des fichiers XML ou des représentations similaires, en tant qu'entrées pour fournir les composants de base de la logique, des transformations, du mappage et de la gestion des clés du système 1.

Chacun des services ou solutions (service de sécurité à jetons, service de gestion, solutions de calcul intensif) accessibles via le microservice mandataire 20 peut être pris en charge par un microservice correspondant ou une chaîne de microservices fournissant la logique de mise en oeuvre du service fourni. Dans le cadre du procédé selon l'invention, les microservices peuvent être exécutés individuellement et séparément dans une zone de sécurité en tant que microservice(s).

En particulier, un système 1 informatique de génération d'une donnée agrégée selon l'invention comporte **un microservice mandataire 20,** configuré pour recevoir un message provenant d'une interface agrégée. En particulier, le message provenant de l'interface agrégée peut comporter des informations de commande d'accès d'un client utilisateur 2. Ces informations de commande d'accès pourront correspondre à des paramètres pour lesquels le client utilisateur demande une valeur ou encore à des données que souhaite recevoir le client utilisateur. Le message provenant de l'interface agrégée peut en outre comporter des données d'identifiant du client utilisateur.

Le microservice mandataire 20 est aussi configuré pour déterminer des données à agréger à partir des données accessibles. La détermination des données accessible est réalisée de préférence par les microservices de calculs, par exemple via la sélection de données mémorisée sur une mémoire de données accessible au microservice de calcul. La détermination des données à agréger pourra par exemple être basée sur des données mémorisées sur un mémoire de données accessible au microservice mandataire 20.

Le microservice mandataire 20 est aussi configuré pour générer une donnée agrégée à partir des données à agréger. Cette génération peut par exemple être basée sur des formules de calcul prédéterminée et mémorisées sur un mémoire de données accessible au microservice mandataire 20. Par exemple, en fonction des données accessibles et d'un référentiel d'agrégation comportant des formules de calcul prédéterminée, le microservice mandataire 20 générera une donnée agrégée.

Le microservice mandataire 20 est aussi configuré pour transmettre la donnée agrégée à l'interface agrégée 10 du client utilisateur 2.

En outre, le microservice mandataire 20 peut être configuré pour recevoir des informations d'accès d'un client utilisateur 2. Le microservice mandataire 20 peut être couplé à un complément permettant de prendre en compte des politiques d'autorisation spécifiques à chaque microservice (logique métier), cela permettant une normalisation des échanges entre le microservice mandataire 20 et le microservice de sécurité à jetons 30. En particulier, cela peut être utilisé pour synchroniser des attributs utilisateurs (potentiellement de nature très différente entre eux) en correspondance avec les rôles spécifiques aux logiques métier/microservices.

Le microservice mandataire 20 est avantageusement configuré pour acheminer les demandes entrantes vers le microservice approprié en fonction du point de terminaison (« endpoint » en terminologie anglosaxonne) spécifié, de la logique et / ou des arguments.

Le système 1 informatique de génération d'une donnée agrégée selon l'invention comporte **au moins un microservice de calcul 50, 51, 52, 53** pour chacune des solutions de calcul intensif 70,71,72,73. Chacun des microservice de calcul 50, 51, 52, 53 peut être relié à sa solution de calcul intensif respectif dans des canaux sécurisés telles que des connexions ssh, pour « secure shell » selon une terminologie anglo-saxonne, ou Mosh pour « mobile shell » selon une terminologie anglo-saxonne.

De préférence, les microservices de calcul 50,51,52,53 sont configurés pour déterminer des données accessibles au client utilisateur 2. Cette détermination se faisant en particulier à partir d'informations de commande d'accès.

En outre, chacun des microservices de calcul 50, 51, 52, 53, peut être configuré pour déterminer des autorisations accordées au client utilisateur 2. En effet, une fois qu'un attribut de rôle a été déterminé celui-ci peut être transféré à un microservice qui pourra, sur la base de la valeur d'attribut de rôle et des données contenues dans un référentiel d'autorisations 40, déterminer des autorisations accordées au client utilisateur 2.

En particulier, les microservices de calcul 50, 51, 52, 53 couplés au microservice mandataire 20 peuvent être configurés pour pointer vers (ou être liés) respectivement à un service particulier ou à un serveur particulier. Ainsi, quand un microservice de calcul est appelé, un service de calcul intensif correspondant est sélectionné.

En particulier, un système 1 informatique de génération d'une donnée agrégée selon l'invention comporte **un microservice de sécurité à jeton 30,** configuré pour recevoir les informations d'accès d'un client utilisateur 2, pour authentifier le client utilisateur 2 et pour déterminer au moins un attribut de rôle pour le client utilisateur 2 à partir des informations d'accès et de données mémorisées dans un référentiel de sécurité 35,36,37.

De façon préférée, le microservice de sécurité à jeton 30 est en outre configuré pour générer un jeton, ledit jeton permettant un accès à toutes les solutions de calcul intensif accessibles audit client utilisateur 2 en fonction de l'au moins un attribut de rôle déterminé.

De façon préférée, bien que le microservice de sécurité à jeton 30 fasse partie d'un système 1 informatique de gestion selon l'invention, il est avantageusement hébergé sur un ou plusieurs dispositifs informatiques (e.g. serveurs) différents du ou des dispositifs informatiques hébergeant le microservice mandataire 20 et/ou les microservices de calcul 50, 51, 52, 53.

Le microservice de sécurité à jeton 30 peut être configuré pour acheminer les demandes entrantes vers le service approprié en fonction du point de terminaison (« endpoint » en terminologie anglosaxonne) spécifié, de la logique et / ou des arguments.

En particulier, le microservice de sécurité à jeton 30 couplé au microservice mandataire 20 peut être configuré pour pointer vers (ou être lié à) un service particulier ou à un serveur particulier. Le microservice de sécurité à jetons 30 peut être configuré pour accéder à une pluralité d'annuaire, de préférence à au moins des annuaires de type LDAP 35, Active Directory^{®} 36 et Kerberos^{®} 37.

En outre, le microservice de sécurité à jetons 30 peut avantageusement être configuré de façon à pouvoir attribuer des rôles partagés ou des rôles spécifiques, de préférence il est configuré de façon à pouvoir attribuer un rôle partagé par tous les microservices de calculs 50, 51, 52, 53.

En outre, un système 1 informatique de génération d'une donnée agrégée selon l'invention peut également comporter un **microservice 55 de gestion.** Un tel microservice de gestion pourra être connecté aux microservices de calcul 50, 51, 52, 53, au microservice mandataire et au microservice de sécurité à jetons. De plus, ce microservice de gestion pourra être configuré pour répartir les taches de calcul entre les moyens de calcul et de les ordonner. En particulier, il pourra être configuré pour organiser l'exécution optimale des taches par les différentes solutions de calcul intensif disponibles.

En outre, le système 1 d de génération d'une donnée agrégée selon l'invention peut également comporter un **serveur 80 de visualisation distante,** de préférence un serveur de visualisation 3D distante.

Un tel serveur 80 de visualisation distante permet à des clients utilisateurs 2 de faire exécuter des applications graphiques 2D / 3D interactives sur des serveurs distants au lieu de leur système, et d'ouvrir des sessions de visualisation pour les contrôler à distance. Ainsi, l'ensemble du calcul et du rendu des applications graphiques, y compris le rendu 3D, s'effectue côté serveur sur des ressources dédiées. Les entrées clavier et souris du client utilisateur 2 sont transférées au serveur qui, en retour, code la scène graphique en pixels et renvoie les données sous forme de flux vidéo au client utilisateur 2. Le client utilisateur 2 est alors uniquement responsable du rendu du flux vidéo 2D. Un tel serveur permet de ne travailler que sur des données distantes sans avoir à les transférer sur le réseau. En effet, en règle générale, les fichiers de résultats de calcul peuvent être très volumineux (de giga-octets à téraoctets) et ne peuvent pas être transférés efficacement via Internet ou des réseaux privés d'entreprise. En outre, une telle visualisation distante associée à la gestion des autorisations selon l'invention permet d'augmenter la sécurité de la technologie.

## Revendications

1. Procédé (200) de génération, par un système informatique (1), d'une donnée agrégée accessible au niveau d'une interface agrégée (10) d'un client utilisateur (2) à partir de données provenant d'une pluralité de solutions de calcul intensif (70), lesdites solutions de calcul intensif (70) comportant au moins deux solutions parmi : un serveur de calcul haute performance (71), un serveur dédié à l'apprentissage supervisé ou non supervisé (72), et un serveur dédié aux calculs quantiques (73), ledit système informatique (1) comportant un microservice mandataire (20) et au moins un microservice de calcul (50,51,52,53) pour chacune des solutions de calcul intensif, ledit procédé de génération comportant les étapes de :
- Réception (210), par le microservice mandataire (20), d'informations de commande d'accès d'un client utilisateur (2) contenues dans un message provenant de l'interface agrégée (10),
- Détermination (220) de données accessibles au client utilisateur (2), par chacun des microservices de calcul (50, 51, 52, 53), ladite détermination étant basée au moins en partie sur les informations de commande d'accès transmises par le microservice mandataire (20),
- Détermination (230) de données à agréger, par le microservice mandataire (20), à partir des données accessibles déterminées par chacun des microservices de calcul (50,51,52,53), lesdites données à agréger consistant en une sous partie des données accessibles,
- Génération (240) d'une donnée agrégée à partir des données à agréger, par le microservice mandataire (20), à partir des données accessibles déterminées par chacun des microservices de calcul (50, 51, 52, 53), et
- Transmission (250) de la donnée agrégée, par le microservice mandataire (20) à l'interface agrégée (10) du client utilisateur (2).

2. Procédé (100) de génération d'une donnée agrégée selon la revendication 1, **caractérisé en ce que** le microservice mandataire (20) reçoit une requête d'une interface agrégée (10) en cours d'exécution sur un client utilisateur (2) et **en ce qu'**il peut sélectionner un ou plusieurs des microservices de calcul (51, 52, 53) à opérer sur la demande.

3. Procédé (100) de génération d'une donnée agrégée selon la revendication 1 ou 2, **caractérisé en ce que** le microservice mandataire (20) fourni la possibilité de faire (211) plusieurs demandes (Rq) parallèles à plusieurs microservices de calcul (51, 52, 53) et d'extraire un ensemble commun de données des sorties renvoyées par les microservices de calcul (51, 52, 53).

4. Procédé (100) de génération d'une donnée agrégée selon l'une des revendications précédentes, **caractérisé en ce que** la détermination (230) de données à agréger met en oeuvre un référentiel de mots-clés (21) comportant des correspondances entre données accessibles pour chacun des microservices de calcul (50,51,52,53).

5. Procédé (100) de génération d'une donnée agrégée selon l'une des revendications précédentes, **caractérisé en ce que** les microservices de calcul (51, 52, 53) peuvent être appelés avec des messages du microservice mandataire (20) parallèles et les informations contenues dans des messages de réponse (Rp) peuvent être agrégées au fur et à mesure que des résultats reviennent au microservice mandataire (20).

6. Procédé (100) de génération d'une donnée agrégée selon l'une des revendications précédentes, **caractérisé en ce qu'**il comporte en outre les étapes suivantes :
- Détermination (260) de données redondantes, par le microservice mandataire (20), à partir des données accessibles déterminées par chacun des microservices de calcul, et
- Transmission (270) d'un seul exemplaire de chacune des données redondantes, par le microservice mandataire (20) à l'interface agrégée du client utilisateur (2).

7. Procédé (100) de génération d'une donnée agrégée selon l'une des revendications précédentes, **caractérisé en ce qu'**il comporte en outre les étapes suivantes :
- Transmission (250) des données accessibles, par le microservice mandataire (20) à l'interface agrégée du client utilisateur (2) ; et
- Détermination (260) de données redondantes, par l'interface agrégée (10), à partir des données accessibles transmises par le microservice mandataire (20)
- Affichage, par l'interface agrégée (10), d'un seul exemplaire de chacune des données redondantes.

8. Procédé (100) de génération d'une donnée agrégée selon l'une des revendications précédentes, caractérisé en ce la donnée agrégée est transmise à un serveur (80) de visualisation distante, et en ce que le procédé (100) de génération d'une donnée agrégée comporte en outre une étape d'établissement d'une liaison de communication entre le client utilisateur (2) et le serveur de visualisation (80) distante, une étape de génération de données de représentation à partir de la donnée agrégée par le serveur (80) de visualisation distant et une étape de transmission, par le serveur (80) de visualisation, des données de représentation au client utilisateur (2).

9. Procédé (100) de génération d'une donnée agrégée selon l'une des revendications précédentes, **caractérisé en ce que** le système informatique (1) de génération d'une donnée agrégée comporte en outre au moins un référentiel d'autorisations (40), et **en ce que** le procédé de génération comporte en outre les étapes suivantes :
- Réception (310), par le microservice mandataire (20), d'une commande d'action générée par le client utilisateur (2) et contenue dans un message provenant de l'interface agrégée (10) ;
- Identification (320) d'actions autorisées, par chacun des microservices de calcul (50,51,52,53), ladite identification étant basée au moins en partie sur la commande d'action et sur un référentiel d'autorisations (40) ;
- Génération (330) d'une commande d'action transformée, par chacun des microservices de calcul (50,51,52,53) ayant identifiés une action autorisée; et
- Transmission (340) de la commande d'action transformée, par chacun des microservices de calcul (50,51,52,53) aux solutions de calcul intensifs (70) concernés.

10. Procédé (100) de génération d'une donnée agrégée selon l'une des revendications précédentes, **caractérisé en ce que** la donnée agrégée est sélectionnée parmi :
- Des fichiers d'entrée de calculs accessibles et traitables par plusieurs solutions de calcul intensif ;
- Des résultats de calculs accessibles et traitables par plusieurs microservices de calcul ;
- Des mesures de consommation énergétique ;
- Des mesures d'utilisation de ressources ;
- Des paramètres systèmes ;
- Des descriptions des infrastructures matérielles ;
- Des données d'indice d'utilisation des processus de calcul intensifs ; et
- Des données de durée avant complétude des calculs.

11. Procédé (100) de génération d'une donnée agrégée selon l'une des revendications précédentes, **caractérisé en ce que** le système informatique (1) de génération d'une donnée agrégée comporte en outre un microservice de sécurité à jeton (30), au moins un référentiel de sécurité (35,36,37), et au moins un référentiel d'autorisations (40), ledit procédé comportant une procédure (100) de gestion des autorisations accordées à un client utilisateur (2) comportant les étapes de :
- Réception (110), par le microservice de sécurité à jeton (30), d'informations d'accès d'un client utilisateur (2),
- Authentification (120) du client utilisateur (2) et détermination (130), par le microservice de sécurité à jeton (30), d'au moins un attribut de rôle pour le client utilisateur (2) à partir des informations de commande d'accès et de données mémorisées dans le référentiel de sécurité (35,36,37),
- Génération (140) d'un jeton, par le microservice de sécurité à jeton (30), ledit jeton permettant un accès à toutes les solutions de calcul intensif accessibles audit client utilisateur (2) en fonction de l'au moins un attribut de rôle déterminé, et
- Détermination (150) d'autorisations accordées au client utilisateur (2), par l'au moins un microservice de calcul (50,51,52,53), ladite détermination étant basée sur l'au moins un attribut de rôle déterminé et des données contenues dans l'au moins un référentiel d'autorisations (40).

12. Procédé (100) de génération d'une donnée agrégée selon la revendication 11, **caractérisé en ce que** les informations d'accès d'un client utilisateur (2) proviennent d'un message envoyé depuis une interface agrégée (10) du client utilisateur (2) au microservice mandataire (20).

13. Procédé (100) de génération d'une donnée agrégée selon l'une des revendications précédentes, **caractérisé en ce qu'**il comporte une procédure (300) de gestion de commande d'action et **en ce que** dans le cadre de cette procédure (300) de gestion de commande d'action, le système informatique (1) de génération d'une donnée agrégée comporte en outre un microservice de sécurité à jeton (30), au moins un référentiel de sécurité (35,36,37) et au moins un référentiel d'autorisations (40), la procédure (300) de gestion de commande d'action comportant une identification (320) d'actions autorisées par chacun des microservices de calcul (50,51,52,53) basée au moins en partie sur la commande d'action et sur ledit référentiel d'autorisations (40) et **en ce que** les microservices de calcul peuvent, grâce au référentiel d'autorisations (40), déterminer si cette commande d'action se réfère à une ou plusieurs actions autorisées pour un client utilisateur (2) donné.

14. Système (1) informatique de génération d'une donnée agrégée accessible au niveau d'une interface agrégée (10) d'un client utilisateur (2) à partir de données provenant d'une pluralité de solutions de calcul intensif (70), lesdites solutions de calcul intensif (70) comportant au moins deux solutions parmi : un serveur de calcul haute performance (71), un serveur dédié à l'apprentissage supervisé ou non supervisé (72), et un serveur dédié aux calculs quantiques (73), le système informatique (1) comportant :
- au moins un microservice de calcul (50,51,52,53) pour chacune des solutions de calcul intensif, l'au moins un microservice de calcul (50,51,52,53) étant configuré pour déterminer des données accessibles au client utilisateur (2), ladite détermination étant basée au moins en partie sur des informations de commande d'accès, et
- un microservice mandataire (20) configuré pour :
- Recevoir un message provenant de l'interface agrégée (10), ledit message comportant des informations de commande d'accès d'un client utilisateur (2),
- Déterminer des données à agréger à partir des données accessibles déterminées par chacun des microservices de calcul (50,51,52,53), lesdites données à agréger consistant en une sous partie des données accessibles déterminées par l'au moins un microservice de calcul (50,51,52,53),
- Générer une donnée agrégée à partir des données à agréger à partir des données accessibles déterminées par chacun des microservices de calcul (50, 51, 52, 53), et
- Transmettre la donnée agrégée à l'interface agrégée (10) du client utilisateur (2).

## Patentansprüche

1. Verfahren (200) zum Erzeugen, durch ein Computersystem (1), einer aggregierten Dateneinheit, auf die an einer aggregierten Schnittstelle (10) eines Benutzer-Clients (2) zugegriffen werden kann, aus Daten, die von einer Vielzahl von rechenintensiven Lösungen (70) stammen, wobei die rechenintensiven Lösungen (70) mindestens zwei Lösungen aufweisen aus: einem Hochleistungsberechnungsserver (71), einem Server für überwachtes oder unüberwachtes Lernen (72) und einem Server für Quantenberechnungen (73), wobei das Computersystem (1) einen Proxy-Mikrodienst (20) und mindestens einen Berechnungsmikrodienst (50, 51, 52, 53) für jede der rechenintensiven Lösungen aufweist, wobei das Erzeugungsverfahren die folgenden Schritte aufweist:
- Empfangen (210), durch den Proxy-Mikrodienst (20), von Informationen zum Steuern eines Zugriffs eines Benutzer-Clients (2), die in einer Nachricht, die von der aggregierten Schnittstelle (10) stammt, enthalten sind,
- Bestimmen (220) von Daten, auf die der Benutzer-Client (2) zugreifen kann, durch jeden der Berechnungsmikrodienste (50, 51, 52, 53), wobei das Bestimmen mindestens teilweise auf den Zugriffssteuerungsinformationen basiert, die durch den Proxy-Mikrodienst (20) übertragen werden,
- Bestimmen (230) von zu aggregierenden Daten, durch den Proxy-Mikrodienst (20), aus den Daten, auf die zugegriffen werden kann, die durch jeden der Berechnungsmikrodienste (50, 51, 52, 53) bestimmt werden, wobei die zu aggregierenden Daten aus einem Unterteil der Daten bestehen, auf die zugegriffen werden kann,
- Erzeugen (240) einer aggregierten Dateneinheit aus den zu aggregierenden Daten, durch den Proxy-Mikrodienst (20), aus den Daten, auf die zugegriffen werden kann, die durch jeden der Berechnungsmikrodienste (50, 51, 52, 53) bestimmt werden, und
- Übertragen (250) der aggregierten Dateneinheit, durch den Proxy-Mikrodienst (20), an die aggregierte Schnittstelle (10) des Benutzer-Clients (2).

2. Verfahren (100) zum Erzeugen einer aggregierten Dateneinheit nach Anspruch 1, **dadurch gekennzeichnet, dass** der Proxy-Mikrodienst (20) eine Anfrage von einer aggregierten Schnittstelle (10) im Laufe einer Ausführung auf einem Benutzer-Client (2) empfängt, und **dadurch, dass** er einen oder mehrere der Berechnungsmikrodienste (51, 52, 53) auswählen kann, um auf Anforderung zu arbeiten.

3. Verfahren (100) zum Erzeugen einer aggregierten Dateneinheit nach Anspruch 1 oder 2, **dadurch gekennzeichnet, dass** der Proxy-Mikrodienst (20) die Möglichkeit bereitstellt, mehrere Anforderungen (Rq) parallel an mehrere Berechnungsmikrodienste (51, 52, 53) zu stellen (211) und einen gemeinsamen Datensatz aus den Ausgaben zu extrahieren, die durch die Berechnungsmikrodienste (51, 52, 53) zurückgesendet werden.

4. Verfahren (100) zum Erzeugen einer aggregierten Dateneinheit nach einem der vorstehenden Ansprüche, **dadurch gekennzeichnet, dass** das Bestimmen (230) der zu aggregierenden Daten ein Repository von Schlüsselwörtern (21) implementiert, das Entsprechungen zwischen Daten aufweist, auf die jeder der Berechnungsmikrodienste (50, 51, 52, 53) zugreifen kann.

5. Verfahren (100) zum Erzeugen einer aggregierten Dateneinheit nach einem der vorstehenden Ansprüche, **dadurch gekennzeichnet, dass** die Berechnungsmikrodienste (51, 52, 53) mit parallelen Proxy-Mikrodienstnachrichten (20) aufgerufen werden können, und die Informationen, die in Antwortnachrichten (Rp) enthalten sind, nach und nach aggregiert werden können, wenn die Ergebnisse an den Mikrodienst-Agenten (20) zurückkommen.

6. Verfahren (100) zum Erzeugen einer aggregierten Dateneinheit nach einem der vorstehenden Ansprüche, **dadurch gekennzeichnet, dass** es ferner die folgenden Schritte aufweist:
- Bestimmen (260) von redundanten Daten, durch den Proxy-Mikrodienst (20), aus den Daten, auf die zugegriffen werden kann, die durch jeden der Berechnungsmikrodienste bestimmt werden, und
- Übertragen (270) eines einzigen Exemplars jeweils der redundanten Daten, durch den Proxy-Mikrodienst (20) an die aggregierte Schnittstelle des Benutzer-Clients (2).

7. Verfahren (100) zum Erzeugen einer aggregierten Dateneinheit nach einem der vorstehenden Ansprüche, **dadurch gekennzeichnet, dass** es ferner die folgenden Schritte aufweist:
- Übertragen (250) der Daten, auf die zugegriffen werden kann, durch den Proxy-Mikrodienst (20) an die aggregierte Schnittstelle des Benutzer-Clients (2); und
- Bestimmen (260) von redundanten Daten, durch die aggregierte Schnittstelle (10), aus den Daten, auf die zugegriffen werden kann, die durch den Proxy-Mikrodienst (20) übertragen werden
- Anzeigen, durch die aggregierte Schnittstelle (10), eines einzigen Exemplars jeweils der redundanten Daten.

8. Verfahren (100) zum Erzeugen einer aggregierten Dateneinheit nach einem der vorstehenden Ansprüche, **dadurch gekennzeichnet, dass** die aggregierte Dateneinheit an einen entfernten Visualisierungsserver (80) übertragen wird, und **dadurch, dass** das Verfahren (100) zum Erzeugen einer aggregierten Dateneinheit ferner einen Schritt zum Herstellen einer Kommunikationsverbindung zwischen dem Benutzer-Client (2) und dem entfernten Visualisierungsserver (80), einen Schritt zum Erzeugen von Darstellungsdaten aus den Daten, die durch den entfernten Visualisierungsserver (80) aggregiert werden, und einen Schritt zum Übertragen, durch den Visualisierungsserver (80), von Darstellungsdaten an den Benutzer-Client (2) aufweist.

9. Verfahren (100) zum Erzeugen einer aggregierten Dateneinheit nach einem der vorstehenden Ansprüche, **dadurch gekennzeichnet, dass** das Computersystem (1) zum Erzeugen einer aggregierten Dateneinheit ferner mindestens ein Berechtigungsrepository (40) aufweist, und **dadurch, dass** das Erzeugungsverfahren ferner die folgenden Schritte umfasst:
- Empfangen (310), durch den Proxy-Mikrodienst (20), einer Aktionssteuerung, die durch den Benutzer-Client (2) erzeugt wird und in einer Nachricht enthalten ist, die von der aggregierten Schnittstelle (10) stammt;
- Identifizieren (320) von Aktionen, für die durch jeden der Berechnungsmikrodienste (50, 51, 52, 53) die Berechtigung erteilt wird, wobei das Identifizieren mindestens teilweise auf der Aktionssteuerung und auf einem Berechtigungsrepository (40) basiert;
- Erzeugen (330) einer transformierten Aktionssteuerung, durch jeden der Berechnungsmikrodienste (50, 51, 52, 53), die eine Aktion identifiziert haben, für die die Berechtigung erteilt wurde; und
- Übertragen (340) der transformierten Aktionssteuerung, durch jeden der Berechnungsmikrodienste (50, 51, 52, 53) an die betreffenden rechenintensiven Lösungen (70).

10. Verfahren (100) zum Erzeugen einer aggregierten Dateneinheit nach einem der vorstehenden Ansprüche, **dadurch gekennzeichnet, dass** die aggregierte Dateneinheit ausgewählt wird aus:
- Berechnungseingabedateien, auf die durch mehrere rechenintensive Lösungen zugegriffen werden kann und die durch diese verarbeitbar sind;
- Berechnungsergebnisse, auf die durch mehrere Berechnungsmikrodienste zugegriffen werden kann und die durch diese verarbeitbar sind;
- Energieverbrauchsmessungen;
- Maßnahmen für eine Nutzung von Ressourcen;
- Systemparameter;
- Beschreibungen von Hardware-Infrastrukturen;
- Nutzungsindexdaten von rechenintensiven Prozessen; und
- Daten einer Dauer vor Abschluss der Berechnungen.

11. Verfahren (100) zum Erzeugen einer aggregierten Dateneinheit nach einem der vorstehenden Ansprüche, **dadurch gekennzeichnet, dass** das Computersystem (1) zum Erzeugen einer aggregierten Dateneinheit ferner einen Token-Sicherheitsmikrodienst (30), mindestens ein Sicherheitsrepository (35, 36, 37) und mindestens ein Berechtigungsrepository (40) aufweist, wobei das Verfahren eine Prozedur (100) zum Verwalten der einem Benutzer-Client (2) gewährten Berechtigungen aufweist, die die Schritte aufweist zum:
- Empfangen (110), durch den Token-Sicherheitsmikrodienst (30), von Zugriffsinformationen von einem Benutzer-Client (2),
- Authentifizieren (120) des Benutzer-Clients (2) und Bestimmen (130), durch den Token-Sicherheitsmikrodienst (30), von mindestens einem Rollenattribut für den Benutzer-Client (2) aus den Zugriffssteuerungsinformationen und den Daten, die in dem Sicherheitsrepository (35, 36, 37) gespeichert sind,
- Erzeugen (140) eines Tokens, durch den Token-Sicherheitsmikrodienst (30), wobei das Token einen Zugriff auf sämtliche der rechenintensiven Lösungen ermöglicht, auf die der Benutzer-Client (2) in Abhängigkeit von dem mindestens einen bestimmten Rollenattribut zugreifen kann, und
- Bestimmen (150) von Berechtigungen, die dem Benutzer-Client (2) gewährt werden, durch den mindestens einen Berechnungsmikrodienst (50, 51, 52, 53), wobei das Bestimmen auf dem mindestens einen bestimmten Rollenattribut und auf Daten basiert, die in dem mindestens einen Berechtigungsrepository (40) enthalten sind.

12. Verfahren (100) zum Erzeugen einer aggregierten Dateneinheit nach Anspruch 11, **dadurch gekennzeichnet, dass** die Zugriffsinformationen eines Benutzer-Clients (2) aus einer Nachricht stammen, die von einer aggregierte Schnittstelle (10) des Benutzer-Clients (2) an den Proxy-Mikrodienst (20) gesendet wird.

13. Verfahren (100) zum Erzeugen einer aggregierten Dateneinheit nach einem der vorstehenden Ansprüche, **dadurch gekennzeichnet, dass** es eine Aktionssteuerungverwaltungsprozedur (300) aufweist, und **dadurch, dass** im Rahmen dieser Aktionssteuerungverwaltungsprozedur (300) das Computersystem (1) zum Erzeugen einer aggregierten Dateneinheit ferner mindestens einen Token-Sicherheitsmikrodienst (30), ein Sicherheitsrepository (35,36,37) und mindestens ein Berechtigungsrepository (40) aufweist, wobei die Aktionssteuerungverwaltungsprozedur (300) ein Identifizieren (320) von Aktionen aufweist, für die durch jeden der Berechnungsmikrodienste (50, 51, 52, 53) mindestens teilweise basierend auf der Aktionssteuerung und auf dem Berechtigungsrepository (40) die Berechtigung erteilt wird, und **dadurch, dass** die Berechnungsmikrodienste dank des Berechtigungsrepositorys (40) bestimmen können, ob sich diese Aktionssteuerung auf eine oder mehrere Aktionen bezieht, für die für einen gegebenen Benutzer-Client (2) die Berechtigung erteilt wird.

14. Computersystem (1) zum Erzeugen einer aggregierten Dateneinheit, auf die an einer aggregierten Schnittstelle (10) eines Benutzer-Clients (2) zugegriffen werden kann, aus Daten, die von einer Vielzahl von rechenintensiven Lösungen (70) stammen, wobei die rechenintensiven Lösungen (70) mindestens zwei Lösungen aufweisen aus: einem Hochleistungsberechnungsserver (71), einem Server für überwachtes oder unüberwachtes Lernen (72) und einem Server für Quantenberechnungen (73), wobei das Computersystem (1) aufweist:
- mindestens einen Berechnungsmikrodienst (50, 51, 52, 53) für jede der rechenintensiven Lösungen, wobei der mindestens eine Berechnungsmikrodienst (50, 51, 52, 53) zum Bestimmen von Daten konfiguriert ist, auf die der Benutzer-Client (2) zugreifen kann, wobei das Bestimmen mindestens teilweise auf Zugriffssteuerungsinformationen basiert, und
- einen Proxy-Mikrodienst (20), der konfiguriert ist zum:
- Empfangen einer Nachricht, die von der aggregierten Schnittstelle (10) stammt, wobei die Nachricht Zugriffssteuerungsinformationen von einem Benutzer-Client (2) aufweist,
- Bestimmen von zu aggregierenden Daten aus den Daten, auf die zugegriffen werden kann, die durch jeden der Berechnungsmikrodienste (50, 51, 52, 53) bestimmt werden, wobei die zu aggregierenden Daten aus einem Unterteil der Daten bestehen, auf die zugegriffen werden kann, die durch mindestens einen Berechnungsmikrodienst (50, 51, 52, 53) bestimmt werden,
- Erzeugen einer aggregierten Dateneinheit aus den zu aggregierenden Daten aus den Daten, auf die zugegriffen werden kann, die durch jeden der Berechnungsmikrodienste (50, 51, 52, 53) bestimmt werden, und
- Übertragen der aggregierten Dateneinheit an die aggregierte Schnittstelle (10) des Benutzer-Clients (2).

## Claims

1. Method (200) for generating, by a computer system (1), an aggregated piece of data which is accessible at an aggregated interface (10) of a user client (2) from data originating from a plurality of supercomputing solutions (70), said supercomputing solutions (70) comprising at least two solutions from: a high performance computing server (71), a server dedicated to supervised or unsupervised learning (72), and a server dedicated to quantum computation (73), said computer system (1) comprising a proxy microservice (20) and at least one computing microservice (50, 51, 52, 53) for each of the supercomputing solutions, said generation method comprising the steps of:
- receiving (210), by the proxy microservice (20), access control information from a user client (2) contained in a message from the aggregated interface (10),
- determining (220) data accessible to the user client (2), by each of the computing microservices (50, 51, 52, 53), said determination being based at least in part on the access control information transmitted by the proxy microservice (20),
- determining (230) data to be aggregated, by the proxy microservice (20), from the accessible data determined by each of the computing microservices (50, 51, 52, 53), said data to be aggregated consisting of a sub-part of the accessible data,
- generating (240) an aggregated piece of data from the data to be aggregated, by the proxy microservice (20), from the accessible data determined by each of the computing microservices (50, 51, 52, 53), and
- transmitting (250) the aggregated data, by the proxy microservice (20), to the aggregated interface (10) of the user client (2).

2. Method (100) for generating an aggregated piece of data according to claim 1, **characterised in that** the proxy microservice (20) receives a request from an aggregated interface (10) running on a user client (2) and may select one or more of the computing microservices (51, 52, 53) to operate on the request.

3. Method (100) for generating an aggregated piece of data according to claim 1 or 2, **characterised in that** the proxy microservice (20) provides the ability to make (211) several parallel requests (Rq) to several computing microservices (51, 52, 53) and to extract a common set of data from the outputs returned by the computing microservices (51, 52, 53).

4. Method (100) for generating an aggregated piece of data according to one of the preceding claims, **characterised in that** the determination (230) of data to be aggregated uses a keyword repository (21) comprising correspondences between data which are accessible for each of the computing microservices (50, 51, 52, 53).

5. Method (100) for generating an aggregated piece of data according to one of the preceding claims, **characterised in that** the computing microservices (51, 52, 53) may be called with messages from the proxy microservice (20) in parallel, and the information contained in response messages (Rp) may be aggregated as results are returned to the proxy microservice (20).

6. Method (100) for generating an aggregated piece of data according to one of the preceding claims, **characterised in that** it further comprises the following steps:
- determining (260) data which are redundant, by the proxy microservice (20), from the accessible data determined by each of the computing microservices, and
- transmitting (270) a single copy of each of the data which are redundant, by the proxy microservice (20), to the aggregated interface of the user client (2).

7. Method (100) for generating an aggregated piece of data according to one of the preceding claims, **characterised in that** it further comprises the following steps:
- transmitting (250) the accessible data, by the proxy microservice (20), to the aggregated interface of the user client (2); and
- determining (260) data which are redundant, by the aggregated interface (10), from accessible data transmitted by the proxy microservice (20)
- the aggregated interface (10) displaying a single copy of each of the data which are redundant.

8. Method (100) for generating an aggregated piece of data according to one of the preceding claims, **characterised in that** the aggregated data is transmitted to a remote visualisation server (80), and **in that** the method (100) for generating an aggregated piece of data further comprises a step for establishing a communication link between the user client (2) and the remote visualisation server (80), a step for generating representation data from the aggregated data by the remote visualisation server (80), and a step for transmitting the representation data to the user client (2) by the visualisation server (80).

9. Method (100) for generating an aggregated piece of data according to one of the preceding claims, **characterised in that** the computer system (1) for generating an aggregated piece of data further comprises at least one authorisation repository (40), and **in that** the generation method further comprises the following steps:
- receiving (310), by the proxy microservice (20), an action command generated by the user client (2) and contained in a message from the aggregated interface (10);
- identifying (320) authorised actions, by each of the computing microservices (50, 51, 52, 53), said identification being based at least in part on the action command and on an authorisation repository (40);
- generating (330) a transformed action command, by each of the computing microservices (50, 51, 52, 53), having identified an authorised action; and
- transmitting (340) the transformed action command, by each of the computing microservices (50, 51, 52, 53), to the relevant supercomputing solutions (70).

10. Method (100) for generating an aggregated piece of data according to one of the preceding claims, **characterised in that** the aggregated data is selected from:
- computing input files that may be accessed and processed by several supercomputing solutions;
- computing results that may be accessed and processed by several computing microservices;
- energy consumption measurements;
- resource usage measurements;
- system parameters;
- descriptions of hardware infrastructures;
- usage index data for supercomputing processes; and
- duration data before completion of the computing.

11. Method (100) for generating an aggregated piece of data according to one of the preceding claims, **characterised in that** the computer system (1) for generating an aggregated piece of data further comprises a token-based security microservice (30), at least one security repository (35, 36, 37), and at least one authorisation repository (40), said method comprising a procedure (100) for managing the authorisations granted to a user client (2) comprising the steps of:
- receiving (110), by the token-based security microservice (30), access information from a user client (2),
- authenticating (120) the user client (2) and determining (130), by the token-based security microservice (30), at least one role attribute for the user client (2) from the access control information and data stored in the security repository (35, 36, 37),
- generating (140) a token, by the token-based security microservice (30), said token allowing access to all the supercomputing solutions accessible to said user client (2) as a function of the at least one determined role attribute, and
- determining (150) authorisations granted to the user client (2), by the at least one computing microservice (50, 51, 52, 53), said determination being based on the at least one determined role attribute and data contained in the at least one authorisation repository (40).

12. Method (100) for generating an aggregated piece of data according to claim 11, **characterised in that** the access information of a user client (2) comes from a message sent from an aggregated interface (10) of the user client (2) to the proxy microservice (20).

13. Method (100) for generating an aggregated piece of data according to one of the preceding claims, **characterised in that** it comprises an action command management procedure (300) and **in that**, as part of this action command management procedure (300), the computer system (1) for generating an aggregated piece of data further comprises a token-based security microservice (30), at least one security repository (35, 36, 37) and at least one authorisation repository (40), the action command management procedure (300) comprising an identification (320) of actions authorised by each of the computing microservices (50, 51, 52, 53) based at least in part on the action command and on said authorisation repository (40), and **in that** the computing microservices can, thanks to the authorisation repository (40), determine whether this action command refers to one or more actions authorised for a given user client (2).

14. Computer system (1) for generating an aggregated piece of data which is accessible at an aggregated interface (10) of a user client (2) from data from a plurality of supercomputing solutions (70), said supercomputing solutions (70) comprising at least two solutions from: a high performance computing server (71), a server dedicated to supervised or unsupervised learning (72), and a server dedicated to quantum computation (73), the computer system (1) comprising:
- at least one computing microservice (50, 51, 52, 53) for each of the supercomputing solutions, the at least one computing microservice (50, 51, 52, 53) being configured to determine data which are accessible to the user client (2), said determination being based at least in part on access control information, and
- a proxy microservice (20) configured to:
- receive a message from the aggregated interface (10), said message comprising access control information from a user client (2),
- determine data to be aggregated from the accessible data determined by each of the computing microservices (50, 51, 52, 53), said data to be aggregated consisting of a sub-part of the accessible data determined by the at least one computing microservice (50, 51, 52, 53),
- generate an aggregated piece of data from the data to be aggregated from the accessible data determined by each of the computing microservices (50, 51, 52, 53), and
- transmit the aggregated piece of data to the aggregated interface (10) of the user client (2).
